# EUROPEAN PATENT APPLICATION

(11) **EP 4 712 442 A1**
(43) Date of publication of application: **18.03.2026**
(21) Application number: 24814588.0
(22) Date of filing: 31.05.2024
(51) Int. Cl.: H04L 67/10

(54) **METHOD FOR PROVIDING CLOUD SERVICE, CLOUD PLATFORM, AND RELATED APPARATUS**

(30) Priority: 02.06.2023 CN 202310655416; 21.08.2023 CN 202311054802
(71) Applicant: Huawei Cloud Computing Technologies Co., Ltd., Guiyang, Guizhou, 550025 (CN)
(72) Inventor: ZHU, Lei, Guiyang, Guizhou 550025 (CN); YE, Chuan, Guiyang, Guizhou 550025 (CN); PENG, Qian, Guiyang, Guizhou 550025 (CN); ZHOU, Mosong, Guiyang, Guizhou 550025 (CN); XIE, Huaguo, Guiyang, Guizhou 550025 (CN)
(74) Representative: Pfenning, Meinig & Partner mbB
(86) International application number: PCT/CN2024/096654
(87) International publication number: WO 2024/245394

(57) **Abstract**

This application discloses a cloud service providing method, a cloud platform, and a related apparatus, and pertains to the field of cloud computing technologies. The method includes: providing a configuration interface; obtaining attribute information of a target cloud service from the configuration interface; creating, based on the attribute information, a target elastic memory accelerator EMA super instance in a target resource node included in a plurality of resource nodes; and setting a management interface of the target EMA super instance based on a providing manner of the target cloud service, and providing the management interface for a tenant. The tenant may customize a computing resource and a memory resource of the target cloud service based on a service requirement of the tenant, without being limited by a preset specification, to meet the requirement of the tenant and improve performance of the cloud service. In addition, resources of the at least one resource node can be integrated to provide a service for the tenant. In this way, while a user requirement is met, utilization of an idle resource in a data center can be effectively improved, and a resource waste and operation and maintenance costs of a cloud service provider can be reduced.

## Description

This application claims priorities to Chinese Patent Application No. 202310655416.6, filed on June 2, 2023 and entitled "CLOUD SERVICE PROVIDING METHOD, CLOUD PLATFORM, AND RELATED APPARATUS", and to Chinese Patent Application No. 202311054802.6, filed on August 21, 2023 and entitled "CLOUD SERVICE PROVIDING METHOD, CLOUD PLATFORM, AND RELATED APPARATUS", both of which are incorporated herein by reference in their entireties.

### TECHNICAL FIELD

This application relates to the field of cloud computing technologies, and in particular, to a cloud service providing method, a cloud platform, and a related apparatus.

### BACKGROUND

With continuous development of information technologies, especially progress of Internet technologies, large-scale governments, enterprises, and financial institutions start to gradually build data centers of the large-scale governments, enterprises, and financial institutions to meet service requirements of the large-scale governments, enterprises, and financial institutions for resources. Adding physical devices alone is costly. In this context, cloud computing emerges. Based on virtualization technologies, cloud service providers integrate resources and provide services externally in a unified manner, greatly improving resource utilization.

In the related technology, cloud service providers provide basic resource services for tenants through virtual machines, containers, or the like. The virtual machine is used as an example. A specification of the virtual machine is in a predefined mode, that is, the tenant needs to specify a quantity of central processing units (Central Processing Units, CPUs) of the virtual machine and a memory size in the preset specification. If the specification of the virtual machine specified in the preset specification by the tenant is 4U8G, the specification indicates that the virtual machine has four CPU cores and an 8-gigabyte (Gigabyte, GB) memory. When the tenant uses the virtual machine, resources cannot exceed the specified specification.

However, in a cloud computing scenario, with development of services and evolution of applications, the tenant requires an increasingly large memory capacity, and the current preset specification usually cannot meet requirements of some tenants.

### SUMMARY

This application provides a cloud service providing method, an apparatus, a device, a storage medium, and a computer program, to resolve a problem that a user requirement cannot be met in the related technology. The technical solutions are as follows:
According to a first aspect, a cloud service providing method is provided. The method is applied to an elastic memory accelerator service EMAS management node included in a cloud platform. The cloud platform further includes a plurality of resource nodes, and the resource node is configured to provide at least one of a computing resource and a memory resource. The method includes: providing a configuration interface, where the configuration interface is used to prompt a tenant to input attribute information of a to-be-provided target cloud service based on a service requirement, and the attribute information includes a providing manner of the target cloud service and performance configuration information of the target cloud service; obtaining the attribute information of the target cloud service from the configuration interface; creating, based on the attribute information, a target elastic memory accelerator EMA super instance in a target resource node included in the plurality of resource nodes, where the target EMA super instance is used to provide the target cloud service for the tenant, the target resource node includes at least one resource node, and an available resource of the target resource node meets the service requirement; and setting a management interface of the target EMA super instance based on the providing manner of the target cloud service, and providing the management interface for the tenant.

The attribute information of the target cloud service is input by the tenant based on the service requirement. In other words, the tenant may directly customize a computing resource and a memory resource of the target cloud service based on the service requirement of the tenant, without being limited by a preset specification, to meet the requirement of the tenant and improve performance of the cloud service. In addition, the target resource node includes the at least one resource node, in other words, in this application, resources of the at least one resource node can be integrated to provide a service for the tenant. In this way, while the user requirement is met, utilization of an idle resource in a data center can be effectively improved, and a resource waste and operation and maintenance costs of a cloud service provider can be reduced.

When manners of providing the target cloud service selected by the tenant are different, the performance configuration information of the target cloud service includes different content. The following separately describes the content.

First case: The providing manner of the target cloud service is a super instance providing manner. In this case, the performance configuration information of the target cloud service includes a usage type, a memory capacity, a capacity guarantee mode, a capacity step, a computing resource, and bandwidth. The usage type indicates whether the target EMA super instance provides a service in an attachment form, the memory capacity indicates a memory capacity of the target EMA super instance, the capacity guarantee mode indicates whether a resource node on which a memory resource of the target EMA super instance is distributed is variable, the capacity step indicates a memory size of each EMAI included in the target EMA super instance, the computing resource indicates computing performance of the target EMA super instance, and the bandwidth indicates a data transmission amount of the target EMA super instance in unit time.

Optionally, usage types include single-instance usage and attachment usage. The single-instance usage means that the target EMA super instance does not provide the service in the attachment form. The attachment usage means that the target EMA super instance provides the service in the attachment form.

Optionally, memory capacities are classified into a guaranteed capacity and a burst capacity. The guaranteed capacity is a minimum memory capacity that needs to be guaranteed by the target EMA super instance, the burst capacity indicates a maximum capacity of the target EMA super instance, and the burst capacity is greater than or equal to the guaranteed capacity.

Optionally, capacity guarantee modes include a dynamic mode and a static mode. The dynamic mode is a changeable manner, and means that the EMAS management node can split and migrate, based on resource usage of an underlying physical server, an EMAI included in the target EMA super instance. The static mode is an unchangeable manner, and means that after an EMASI is created, the EMASI is not allowed to be split or migrated.

Splitting means that at least two EMAIs are used to provide a resource originally provided by one EMAI. Migration means providing, by using another resource node other than a first resource node, a resource originally provided by the first resource node.

Optionally, a default capacity guarantee mode of the EMAS management node is the dynamic mode. In other words, when the tenant does not select a capacity guarantee mode, the default capacity guarantee mode is the dynamic mode. In this way, resources can be scheduled based on the resource usage of the underlying physical server, to fully utilize the resources.

Optionally, the capacity step indicates a minimum value of a memory capacity of each EMASI included in the target EMA super instance, that is, the memory capacity of each EMAI is not less than the capacity step. The capacity step limits a lower limit of a memory capacity specification of all EMAIs that form the EMA super instance. In this case, a quantity of EMAIs that form the EMA super instance is not greater than a value obtained by dividing an actual memory capacity of the EMA super instance by the capacity step.

Optionally, if the tenant sets the capacity step to 0, it does not mean that a resource quantity of memory resources corresponding to each EMASI is 0. Instead, it means that the EMAS management node can create the EMASI for the tenant based on the resource usage of the underlying physical server without being constrained by the capacity step. A size of the memory resource of the EMASI is related to a size of a resource actually allocated by the EMAS management node.

The bandwidth may be an amount of data transmitted per second of the target EMA super instance, and a unit is GB per second. Certainly, during actual application, the bandwidth may alternatively be represented in another form.

Optionally, a unit of the computing resource is a virtual computing unit (virtual CPU unit, VCU). One VCU may be one core in one physical CPU or data processing unit (Data Processing Unit, DPU), or may be one hyper-thread of one core in one physical CPU or DPU. It should be noted that the VCU may be a computing resource used only by the target EMA super instance, or may be a computing resource shared with another EMA super instance.

Usage types include single-instance usage and attachment usage. When the usage types are different, the performance configuration information of the target cloud service may further include some different information. The following separately describes the information.

Case 1: The usage type is the single-instance usage, that is, the usage type indicates that the target EMA super instance does not provide the service in the attachment form. In this case, the performance configuration information of the target cloud service further includes a latency specification and a placement policy. The latency specification indicates access latency of the memory resource of the target EMA super instance, and the placement policy indicates whether the memory resource and the computing resource of the target EMA super instance are located on a same resource node

Optionally, the latency specification includes performance first or cost first. Performance first means that the EMAS management node selects a resource node with lowest latency from the plurality of resource nodes as the target resource node. Cost first means that the EMAS management node selects a resource node with a lower price from the plurality of resource nodes as the target resource node.

During actual application, in addition to directly selecting performance first or cost first, the tenant may further input a specific latency threshold, to determine the latency specification. In this case, the EMAS management node determines the target resource node based on the latency threshold, and finally obtained access latency of the memory resource of the target EMA super instance is not greater than the latency threshold.

Optionally, a default latency specification of the EMAS management node is cost first. In other words, when the tenant does not select a latency specification, the default latency specification is cost first. Because a resource with low usage is usually at a lower price, the EMAS management node can schedule, based on the resource usage of the underlying physical server, a resource with a lower price that is selected for the tenant, to fully utilize the idle resource in the data center.

Optionally, placement policies include affinity and anti-affinity. Affinity means that the memory resource and the computing resource of the target EMA super instance are located on the same resource node, and anti-affinity means that the memory resource and the computing resource of the target EMA super instance are not located on the same resource node.

It should be noted that if the tenant does not fill in the placement policy, the EMAS management node may determine, based on the resource usage of the underlying physical server, a resource node on which the computing resource and the memory resource of the target EMA super instance are located.

Case 2: The usage type is the attachment usage, that is, the usage type indicates that the target EMA super instance provides the service in the attachment form. In this case, the performance configuration information of the target cloud service further includes an identifier of at least one target instance, a latency specification, a placement policy, an access policy, and a usage mode, where the target instance is an instance used to attach the target EMA super instance, the latency specification indicates latency of accessing the target EMA super instance by the target instance, the placement policy indicates whether the target EMA super instance and a first instance are located on a same resource node, the first instance is one of the at least one target instance, the access policy indicates read/write permission of the at least one target instance on the target EMA super instance, the usage mode indicates a memory addressing manner of the target EMA super instance and a second instance, and the second instance is one of the at least one target instance.

It should be noted that the target instance may be a virtual machine instance, a bare metal server instance, or a container instance, and the target instance needs to be created by using an image that supports an EMA capability.

Optionally, the latency specification includes performance first or cost first. Performance first means that the EMAS management node selects, from the plurality of resource nodes, a resource node with lowest access latency of the target instance as the target resource node. Cost first means that the EMAS management node selects a resource node with a lower price from the plurality of resource nodes as the target resource node.

During actual application, in addition to directly selecting performance first or cost first, the tenant may further input a specific latency threshold, to determine the latency specification. In this case, the EMAS management node determines the target resource node based on the latency threshold, so that the latency of accessing the target EMA super instance by the target instance is not greater than the latency threshold.

Optionally, a default latency specification of the EMAS management node is cost first. In other words, when the tenant does not select a latency specification, the default latency specification is cost first. Because a resource with low usage is usually at a lower price, the EMAS management node can schedule, based on the resource usage of the underlying physical server, a resource with a lower price that is selected for the tenant, to fully utilize the idle resource in the data center.

Optionally, placement policies include affinity and anti-affinity. Affinity means that the target EMA super instance and the first instance are located on the same resource node, and anti-affinity means that the target EMA super instance and the first instance are not located on the same resource node.

It should be noted that if the tenant selects the placement policy, the tenant further needs to input an identifier of the first instance, so that the EMAS management node determines a location at which the first instance is deployed. If the tenant does not fill in the placement policy, the EMAS management node may determine, based on the resource usage of the underlying physical server, a resource node on which the computing resource and the memory resource of the target EMA super instance are located.

Optionally, access policies include private, shared read-only, and shared read/write. Private means that when a quantity of target instances is 1, the target instance has read/write permission on the target EMA super instance. Shared read-only means that when a quantity of target instances to which the target EMA super instance is attached is greater than or equal to 2, a primary attached instance in the at least two target instances has read/write permission, and another target instance has only read-only permission. Shared read/write means that when a quantity of target instances to which the target EMA super instance is attached is greater than or equal to 2, the at least two target instances have read/write permission.

It should be noted that, when the tenant inputs only an identifier of one target instance, the access policy is set to private by default. In addition, when the access policy is set to shared read-only, the tenant needs to input an identifier of the primary attachment instance.

Optionally, usage modes include a full peer-to-peer mode, a semi-peer-to-peer mode, and a heterogeneous mode. The full peer-to-peer mode means that a guest OS is fully managed. In other words, a total memory of the second instance includes a local memory of the second instance and a memory of the target EMA super instance, and the local memory of the second instance and the memory of the target EMA super instance are uniformly addressed. The semi-peer-to-peer mode means that a guest OS is partially managed. In other words, a total memory of the second instance includes a local memory of the second instance and a memory of the target EMA super instance, the local memory of the second instance and the memory of the target EMA super instance are uniformly addressed, but a user can learn of an address segment corresponding to the local memory of the second instance and an address segment corresponding to the memory of the target EMA super instance. In the heterogeneous mode, a memory pool of the EMA super instance of a guest OS is not managed, and unified addressing is not performed.

Second case: The providing manner of the target cloud service is an instanceless providing manner. In this case, the performance configuration information of the target cloud service includes a service type, a performance specification, a maximum quantity of concurrent connections, and a price upper limit, where the service type indicates a requirement of a service of the tenant for a memory resource and a computing resource, the performance specification indicates a quantity of target EMA super instances, the maximum quantity of concurrent connections indicates a quantity of instances that can be connected to the target EMA super instance at a same moment, and the price upper limit indicates an upper limit of a resource provided by the cloud platform for the tenant.

Optionally, service types include memory expansion, computing power offloading, and caching. Different service types have different performance requirements on the target EMA super instance. Caching requires high bandwidth, and has low requirements on the computing resource and a latency specification. Memory expansion has requirements on the computing resource and a memory capacity. Computing power offloading has a low requirement on the computing resource. Certainly, during actual application, there may be another service type that can reflect a service scenario.

Optionally, performance specifications include standard, high performance, and best effort (best effort). In a standard specification, the quantity of target EMA super instances is related to a quantity of instances connected to the target EMA super instance, and the quantity of instances connected to the target EMA super instance is greater than the quantity of target EMA super instances. In a high performance specification, a quantity of instances connected to the target EMA super instance is equal to the quantity of EMA super instances, that is, an instance connected to each target EMA super instance corresponds to one target EMA super instance. In a best effort specification, there is only one target EMA super instance, that is, all instances connected to the target EMA super instance share one target EMA super instance.

It should be noted that if the tenant does not fill in the performance specification or the maximum quantity of concurrent connections, the EMAS management node may dynamically adjust the quantity of target EMA super instances and the maximum quantity of concurrent connections based on resource usage of an underlying physical server.

Optionally, a unit of the price upper limit may be yuan per hour, yuan per month, or yuan per year.

Optionally, after the tenant determines the service type, the performance specification, and the maximum quantity of concurrent connections, the EMAS management node can determine, according to a related algorithm, a basic price corresponding to the service type, the performance specification, and the maximum quantity of concurrent connections that are configured by the tenant, where the price upper limit filled by the tenant is greater than or equal to the basic price.

Optionally, the EMAS management node can obtain attribute information of an available resource of each resource node in each resource pool; determine the target resource node from the plurality of resource nodes based on the attribute information of the available resource of each resource node in each resource pool and the attribute information of the target cloud service, where all resource nodes in the target resource node are located in a same resource pool; create an elastic memory accelerator instance EMAI in each resource node included in the target resource node, to obtain one or more EMAIs; and generate the target EMA super instance based on the one or more EMAIs.

Optionally, a configuration parameter of the target cloud service may be determined based on the attribute information of the target cloud service, and the target resource node may be determined from the plurality of resource nodes based on the configuration parameter of the target cloud service and the attribute information of the available resource of each resource node in each resource pool.

When manners of providing the target cloud service are different, manners of determining the configuration parameter of the target cloud service are different. The following separately describes the manners.

First case: The providing manner of the target cloud service is a super instance providing manner. In this case, the performance configuration information of the target cloud service may be directly used as the configuration parameter of the target cloud service.

Second case: The providing manner of the target cloud service is an instanceless providing manner. In this case, the EMAS management node stores a correspondence between the service type and the configuration parameter of the target cloud service. The configuration parameter of the target cloud service includes a guaranteed capacity, a burst capacity, a computing resource, a capacity step, bandwidth, a latency specification, a guarantee mode, and a placement policy. The EMAS management node can determine the configuration parameter of the target cloud service from the correspondence between the service type and the configuration parameter of the target cloud service based on the service type configured by the tenant.

It should be noted that, in addition to obtaining the attribute information of the target cloud service from the configuration interface, the attribute information of the target cloud service may alternatively be obtained through API invoking, email exchange, or work order exchange, or in another manner.

During actual application, after the management interface is provided for the tenant, the EMAS management node can further determine, based on resource usage of the target EMA super instance by the tenant, whether a resource of the target EMA super instance is overloaded; when determining that the resource of the target EMA super instance is overloaded, determine, based on the attribute information of the target cloud service, whether a resource provided by the cloud platform for the target EMA super instance reaches a configured resource upper limit; and adjust the target resource node when the resource provided by the cloud platform for the target EMA super instance does not reach the configured resource upper limit.

Optionally, the resource of the target EMA super instance includes a memory resource and a computing resource. Whether the memory resource of the target EMA super instance is overloaded is determined based on memory resource usage of the target EMA super instance by the tenant, and whether the computing resource of the target EMA super instance is overloaded is determined based on computing resource usage of the target EMA super instance. When it is determined that the memory resource and/or the computing resource of the target EMA super instance is overloaded, it is determined that the resource of the target EMA super instance is overloaded.

Optionally, the memory resource usage includes a memory occupation ratio. If the memory occupation ratio is greater than a memory ratio threshold, it is determined that the memory resource of the target EMA super instance is overloaded. Otherwise, it is determined that the memory resource of the target EMA super instance is not overloaded.

Optionally, the computing resource usage includes a computing resource occupation ratio, a quantity of queued requests, and response time. If the computing resource occupation ratio is less than a computing resource ratio threshold, the quantity of queued requests is less than a queue quantity threshold, and the response time is less than a response time threshold, it is determined that the computing resource of the target EMA super instance is not overloaded. Otherwise, it is determined that the computing resource of the target EMA super instance is overloaded.

Certainly, during actual application, the computing resource usage may alternatively include at least one of the computing resource occupation ratio, the quantity of queued requests, and the response time.

Optionally, when the resource provided by the cloud platform for the target EMA super instance reaches the configured resource upper limit, prompt information is sent to the tenant, where the prompt information indicates that the resource provided by the cloud platform for the target EMA super instance has reached the configured resource upper limit.

According to a second aspect, a cloud platform is provided. The cloud platform has a function of implementing behavior of the cloud service providing method in the first aspect. The cloud platform includes at least one module, and the at least one module is configured to implement the cloud service providing method provided in the first aspect.

According to a third aspect, a computing device cluster is provided. The computing device cluster includes at least one computing device, each computing device includes a processor and a storage, and the processor of the at least one computing device is configured to execute instructions stored in the storage of the at least one computing device, to cause the computing device cluster to perform the cloud service providing method provided in the first aspect.

Optionally, each computing device may further include a communication bus. The communication bus is configured to establish a connection between the processor and the storage of each computing device.

According to a fourth aspect, a computer-readable storage medium is provided. The storage medium includes computer program instructions, and when the computer program instructions are executed by a computing device cluster, the computing device cluster is caused to perform steps of the cloud service providing method according to the first aspect.

According to a fifth aspect, a computer program product including instructions is provided. When the instructions are run by a computing device cluster, the computing device cluster is caused to perform steps of the cloud service providing method according to the first aspect.

Technical effects achieved in the second aspect, the third aspect, the fourth aspect, and the fifth aspect are similar to the technical effects achieved by corresponding technical means in the first aspect. Details are not described herein again.

### BRIEF DESCRIPTION OF DRAWINGS

FIG. 1 is a diagram of an EMA super instance according to an embodiment of this application;
FIG. 2 is a diagram of an implementation environment according to an embodiment of this application;
FIG. 3 is a diagram of another implementation environment according to an embodiment of this application;
FIG. 4 is a diagram of a structure of a POD resource management node according to an embodiment of this application;
FIG. 5 is a flowchart of a cloud service providing method according to an embodiment of this application;
FIG. 6 is a diagram of resource distribution of an EMA super instance according to an embodiment of this application;
FIG. 7 is a diagram of attachment usage of an EMA super instance according to an embodiment of this application;
FIG. 8 is another diagram of attachment usage of an EMA super instance according to an embodiment of this application;
FIG. 9 is a diagram of an instanceless providing manner according to an embodiment of this application;
FIG. 10 is a diagram of another instanceless providing manner according to an embodiment of this application;
FIG. 11 is a flowchart of using a target cloud service according to an embodiment of this application;
FIG. 12 is a diagram of an instanceless providing manner according to an embodiment of this application;
FIG. 13 is a flowchart of a Java application performance optimization service according to an embodiment of this application;
FIG. 14 is a diagram of a Java application performance optimization service according to an embodiment of this application;
FIG. 15 is a diagram of a data cache service according to an embodiment of this application;
FIG. 16 is a diagram of a structure of an EMAS management node according to an embodiment of this application;
FIG. 17 is a diagram of an architecture of a cloud platform according to an embodiment of this application;
FIG. 18 is a diagram of a structure of a computer device according to an embodiment of this application;
FIG. 19 is a diagram of an architecture of a computing device cluster according to an embodiment of this application; and
FIG. 20 is a diagram of a connection between computing devices according to an embodiment of this application.

### DESCRIPTION OF EMBODIMENTS

To make the objectives, technical solutions, and advantages of this application clearer, the following further describes implementations of this application in detail with reference to the accompanying drawings.

For ease of understanding, before a cloud service providing method provided in embodiments of this application is explained and described in detail, nouns, an application scenario, and an implementation environment in embodiments of this application are first described.

A virtual machine/virtual server (virtual machine), also referred to as a cloud server in a cloud scenario, is a complete computer system that is simulated by software on a same physical server/host based on a virtualization technology, has complete hardware system functions, and runs in a completely isolated environment.

An elastic cloud server (elastic cloud server) is a virtual machine or a cloud server managed by an elastic computing service in cloud computing, can be scaled up or released instantly, and can adjust computing resources at any time based on service requirements, to implement horizontal scaling. The elastic cloud server may also be referred to as an ECS instance.

A super instance (super instance) is a type of virtualized logical instance. The super instance is exposed as an overall logical instance, but may include one or more homogeneous or heterogeneous instances at a bottom layer. These underlying topologies are transparent to users. The users can only directly operate the super instance, and experience is similar to that of operating an instance.

It should be noted that, when the super instance includes only one instance, the super instance is equivalent to the instance. In other words, when there is only one instance at the bottom layer of the super instance, the user can operate the instance.

Instanceless (instanceless) is a type of virtual resource supply manner. When a virtual resource is provided in an instanceless manner, an underlying implementation depends on a super instance. In other words, the virtual resource includes one or more homogeneous or heterogeneous instances. These underlying topologies are transparent to users, and the super instance is also transparent to the users. The users cannot directly operate an underlying instance or the super instance.

An elastic memory accelerator super instance (elastic memory accelerator super instance, EMASI) is a super instance that an elastic memory accelerator service (elastic memory accelerator service, EMAS) management node is responsible for managing. The EMASI is a type of logical instance that has a memory resource. A memory capacity of the EMASI includes a memory resource of at least one elastic memory instance (elastic memory accelerator instance, EMAI). For ease of description, the EMASI is uniformly referred to as an EMA super instance below.

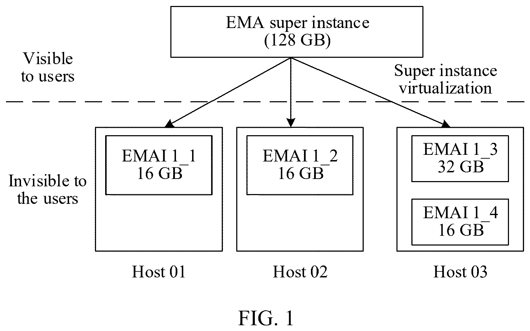

For example, with reference to FIG. 1, a memory resource of the EMA super instance is 128 GB, and the memory resource of the EMA super instance is provided by an EMAI 1_1 on a host 01, an EMAI 1_2 on a host 02, and an EMAI 1_3 and an EMAI 1_4 on a host 03. The EMAI 1_1 provides a memory resource of 16 GB, the EMAI 1_2 provides a memory resource of 16 GB, the EMAI 1_3 provides a memory resource of 32 GB, and the EMAI 1_4 provides a memory resource of 16 GB.

An EMAI is an instance that forms the EMA super instance. The EMAI is an entity instance and cannot be deployed across physical servers.

A user plane operating system (guest operating system, Guest OS) is an operating system running on a virtual cloud server.

A donor node operating system (node operating system, Node OS) is an operating system of a donor node on which a virtual machine or a container is located.

A software development kit (software development kit, SDK) is a software package that integrates a group of development tools and helps developers develop applications on a specific platform. The SDK usually includes development tools such as a compiler, a debugger, a library file, an API document, and sample code, helps developers develop applications more efficiently, and ensures that the applications can interact with a platform appropriately during running. For example, for a specific operating system or development language, a corresponding SDK may be provided to help developers develop applications on the platform.

With the continuous development of information technologies, especially Internet technologies, large-scale governments, enterprises, and financial institutions start to gradually build data centers of the large-scale governments, enterprises, and financial institutions to meet service requirements of the large-scale governments, enterprises, and financial institutions for resources. As the data centers expand rapidly, complexity of the data centers is increasing, and power consumption increases year by year. Adding physical devices alone is costly. In this context, cloud computing emerges. Based on virtualization technologies, cloud service providers integrate resources and provide services in a unified manner, greatly improving resource utilization.

In the related technology, the cloud service providers provide basic resource services at an infrastructure as a service (infrastructure as a service, IaaS) layer for tenants through virtual machines, containers, or the like. The virtual machine is used as an example. A specification of the virtual machine is in a predefined mode, and a tenant needs to specify sizes of computing resources and memory resources of the virtual machine, that is, a quantity of central processing units (central processing units, CPUs) and a memory size in the preset specification. If the specification of the virtual machine specified in the preset specification by the tenant is 4U8G, the specification indicates that the virtual machine has four CPU cores and an 8-gigabyte memory. When the tenant uses the virtual machine, resources cannot exceed the specified specification. Compared with the virtual machine, a container is more flexible. After selecting a quantity of CPUs of the container, the tenant can configure a memory capacity based on a specific step. However, the step is fixed, and a ratio of the quantity of CPUs to the memory capacity also needs to be within a preset ratio range. For example, the preset ratio range is 1:4 to 1:8. In this case, if the tenant selects four CPU cores as the computing resource, a memory capacity selection range can only be 4 GB to 32 GB, and the step is 1 GB. That is, the user can select only an integer memory capacity, and cannot select a memory capacity of 4.5 GB.

However, in a cloud computing scenario, with the development of services and the evolution of applications, the tenant requires an increasingly large memory capacity, and the current preset specification usually cannot meet requirements of some tenants. If memory resources are insufficient, computing performance of a cloud service is severely affected.

In addition, currently, memory resources provided by the IaaS layer are basically homogeneous, that is, memory performance specifications and address space performance specifications are the same. The same memory performance specifications mean that virtual machines with different memory specifications have same memory performance when computing resources are the same. The same address space performance specifications mean that a speed of reading and writing each memory address in virtual machines with the same specifications is also the same. Therefore, performance of memory resources with different memory capacities remains unchanged when the computing resources remain unchanged, and a memory resource with a larger memory capacity corresponds to a higher sales price. If the tenant purchases a larger memory capacity specification when a memory capacity requirement increases, costs of the tenant are greatly increased. In addition, if a service does not have a high requirement on memory performance, the tenant only needs to expand the memory capacity. In this case, the tenant may be unwilling to incur more costs to purchase a high-performance memory capacity. In addition, in actual life, some services do not have high requirements on computing resource performance, but have very high requirements on the memory capacity and the memory performance. In this case, if the tenant purchases both the computing resource and the memory resource, utilization of the computing resource purchased by the tenant is very low, and a memory capacity is also very limited. As a result, the tenant needs to pay for a computing resource that is not used, and a requirement of the tenant for the memory capacity is not met.

If the cloud service provider provides a preset specification with a larger memory ratio for the tenant, utilization of a computing resource in the physical server is severely affected. For example, if a virtual machine with a specification of 1:6 is provided for a tenant in a physical server with a specification of 1:4 (where a ratio of computing resources to memory resources is 1:4), utilization of the computing resources in the physical server is reduced, resulting in a resource waste of the physical server and an increase in operation and maintenance costs of the cloud service provider. For example, a physical server A has 100 CPU cores and a memory of 400 GB, that is, a specification of the physical server is 1:4. If a virtual machine with a specification of 1:6 is provisioned in the physical server A, 66 CPU cores and a memory of 396 GB in the physical server A can provide a service for the tenant. Because computing resources are usually not sold separately, 34 CPU cores and a memory of 4 GB in the physical server A cannot provide a service for the tenant. As a result, a resource waste is caused, and operation and maintenance costs of the cloud service provider are increased. In addition, some idle memory resources that are not sold out temporarily still exist in a data center of the cloud service provider, and an overall sales rate of the memory resources is not high. However, most of the memory resources that are not sold out are scattered, that is, distributed on different physical servers, and a complete memory block cannot be formed and sold together with a virtual machine or a container, resulting in insufficient resource utilization and a resource waste.

Based on this, embodiments of this application provide a cloud service providing method. An EMAS management node can provide a configuration interface, and obtain attribute information of a target cloud service from the configuration interface, where the attribute information includes a providing manner of the target cloud service and performance configuration information of the target cloud service. The EMAS management node can create a target EMA super instance on a target resource node based on the performance configuration information, further set a management interface of the target EMA super instance based on the providing manner of the target cloud service, and provide the management interface for a tenant, to provide the target cloud service for the tenant by using the target EMA super instance. The attribute information is input by the tenant based on a service requirement. In other words, the tenant may directly customize a computing resource and a memory resource of the target cloud service based on the service requirement of the tenant, without being limited by a preset specification, to meet the requirement of the tenant and improve performance of the cloud service. In addition, the target resource node includes at least one resource node, in other words, in embodiments of this application, resources of the at least one resource node can be integrated to provide a service for the tenant. In this way, while the user requirement is met, utilization of an idle resource in a data center can be effectively improved, and a resource waste and operation and maintenance costs of a cloud service provider can be reduced.

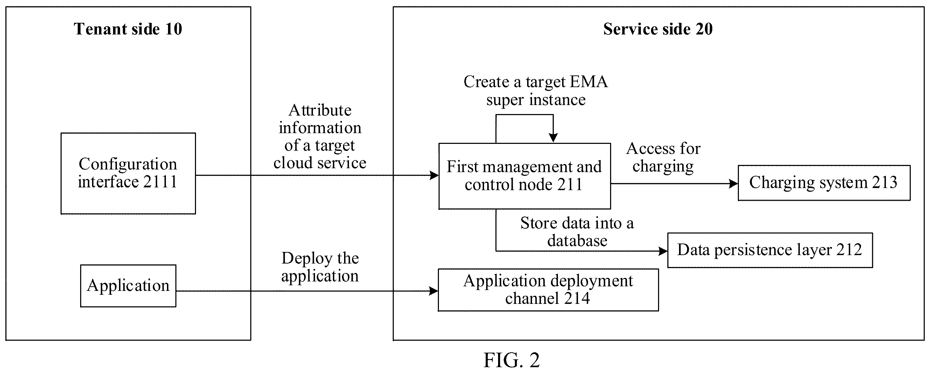

FIG. 2 is a diagram of an implementation environment according to an embodiment of this application. The implementation environment includes a tenant side 10 and a service side (cloud platform) 20. The service side 20 includes an EMAS management node 21 (not shown in FIG. 2) and a plurality of resource nodes 22 (not shown in FIG. 2). Optionally, the EMAS management node 21 includes a first management and control node 211, a data persistence layer 212, a charging system 213, and an application deployment channel 214.

The first management and control node 211 provides a configuration interface 2111, and displays the configuration interface 2111 to the tenant side. The configuration interface 2111 is used to prompt a tenant to input attribute information of a to-be-provided target cloud service based on a service requirement, so that the first management and control node 211 can obtain the attribute information of the target cloud service, create, based on the attribute information of the target cloud service, a target EMA super instance on a target resource node included in the plurality of resource nodes 22, set a management interface of the target EMA super instance, and provide the management interface for the tenant. The first management and control node 211 can further store related data of the target cloud service into a database, that is, convert the related data of the target cloud service into a data model that can be stored at the data persistence layer 212, and store the data model in the data persistence layer 212, to implement long-term storage of the data and access to the data, so as to complete data storage into the database. The data persistence layer 212 may be a disk or a database. This is not limited in this embodiment of this application. After creating the target EMA super instance, the first management and control node 211 can connect the target EMA super instance to the charging system 213, to charge the target EMA super instance. After obtaining the management interface of the target EMA super instance, the tenant can deploy a required application through the management interface of the target EMA super instance and the application deployment channel 214.

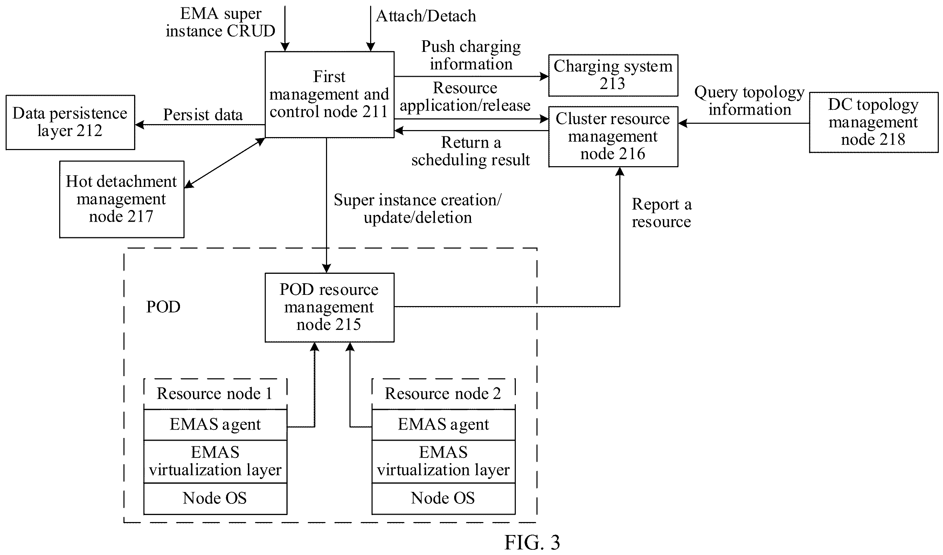

FIG. 3 is a diagram of another implementation environment according to an embodiment of this application. The implementation environment includes an EMAS management node 21 (not shown in FIG. 3) and a plurality of resource nodes 22 (where the plurality of resource nodes 22 are schematically represented by a resource node 1 and a resource node 2 in FIG. 3). In addition to a first management and control node 211, a data persistence layer 212, a charging system 213, and an application deployment channel 214, the EMAS management node 21 further includes at least one POD resource management node 215 (where one POD resource management node is used as an example for description in FIG. 3), a cluster resource management node 216, a hot detachment management node 217, and a DC (Data Center, data center) topology management node 218.

The plurality of resource nodes 22 are located in at least one resource pool. One resource pool may be referred to as one POD. Each POD corresponds to one POD resource management node 215, and each POD includes at least one resource node. Resource nodes in a same POD are located in a same ultra-high-speed network plane. Each resource node may be a physical server, or may be a combination of some resources (computing and memory resources) in the physical server.

For any resource node in any POD, the resource node includes a node OS, an EMAS virtualization layer, and an EMAS agent (Agent). The EMAS virtualization layer is configured to provide a virtualization interface (also referred to as an application programming interface (Application Programming Interface, API)) of the resource node and manage resources in the resource node. The EMAS agent is usually deployed on a physical server on which the resource node is located, and is configured to report a resource status in the resource node to the POD resource management node 215 to which the resource node belongs. The EMAS agent is further configured to: when determining that the resource node is a target resource node, create an EMA super instance by invoking an API provided by the EMAS virtualization layer.

The POD resource management node 215 is configured to: manage a resource in the POD, maintain topology information of the resource in the POD, receive the resource status, in the resource node, reported by the EMAS agent, and integrate resources of the resource node in the POD resource management node 215 into a resource pool. The POD resource management node 215 can further report a resource status of the resource pool in the POD to the cluster resource management node, and indicate the target resource node to create an EMAI.

In some embodiments, the resource pool may include a computing resource pool and a memory resource pool. Each resource node may provide a memory resource and/or a computing resource. A resource node that can provide a memory resource is referred to as a memory resource node, and a resource node that can provide a computing resource is referred to as a computing resource node. Memory resources of each memory resource node may be accumulated into one memory resource pool. Computing resources may be isolated based on computing resource nodes, and computing resources of different computing resource nodes are not accumulated or pooled, to obtain computing resource pools respectively corresponding to a plurality of computing resource nodes. Certainly, during actual application, computing resources of the computing resource node may alternatively be accumulated into one computing resource pool. This is not limited in this embodiment of this application. It should be noted that the ultra-high-speed network plane may be established by using technologies such as compute express link (Compute Express Link, CXL) and remote direct memory access (Remote Direct Memory Access, RDMA). This is not limited in this embodiment of this application.

In some embodiments, the first management and control node 211 can receive a CRUD (creating (Create), retrieve (Retrieve), update (Update), and delete (Delete)) request, an attachment request, a detachment request, or the like of the EMA super instance, and manage a life cycle of the EMA super instance based on the request, that is, perform an operation like creation, retrieving, update, deletion, attachment, or detachment on the EMA super instance. The first management and control node 211 can further set a management interface of the EMA super instance, and provide the management interface for a tenant. In some embodiments, the management and control node 211 can send a resource application request or a resource release request to the cluster resource management node 216, where the resource application request includes performance configuration information of a target cloud service, and the resource release request includes an identifier of an EMA super instance that needs to be released. The cluster resource management node 216 can determine a target resource node based on the performance configuration information of the target cloud service and a resource status of a resource pool in each POD, and send a scheduling result (an identifier of the target resource node) to the first management and control node 211. The cluster resource management node 216 can further determine, based on the identifier of the EMA super instance, a resource node on which resource release needs to be performed, and send a scheduling result (an identifier of the resource node on which resource release needs to be performed) to the first management and control node 211. The first management and control node 211 receives the scheduling result sent by the cluster resource management node 216, and sends an instance creation, update, or deletion request, or the like to the POD resource management node 215 based on the scheduling result. For example, the first management and control node 211 sends a super instance creation request to the POD resource management node 215. The super instance creation request includes the identifier of the target resource node. The POD resource management node 215 sends an EMAI creation instruction to the target resource node based on the identifier of the target resource node.

Optionally, the first management and control node 211 can further perform metadata management, quota (Quota), and authentication. Metadata management refers to counting, integrating, and managing metadata such as technical metadata and operation metadata. Quota (Quota) refers to limiting a quantity of cloud products (services) that a tenant can purchase. This avoids a case in which the tenant purchases a large quantity of one type of cloud products (services), resulting in insufficient underlying resources. Authentication refers to verifying an identity of a user, to ensure that only a user that has permission or that is authorized can access a cloud service or use a cloud resource.

The hot detachment management node 217 can manage hot detachment of the EMA super instance. In other words, when the EMA super instance is attached to an instance A, the EMA super instance is detached without affecting a service of the instance A. The DC topology management node 218 can manage and optimize a physical topology structure of a data center, to improve reliability and efficiency of the data center.

It should be noted that the cloud platform may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), and a big data and artificial intelligence platform, or may be a cloud computing service center.

The first management and control node 211, the data persistence layer 212, the charging system 213, the application deployment channel 214, the POD resource management node 215, the cluster resource management node 216, the hot detachment management node 217, and the DC topology management node 218 may be a same node, or may be different nodes, or may be a same node including at least two of the plurality of nodes. This is not limited in this embodiment of this application.

A person skilled in the art should understand that the EMAS management node, the plurality of resource nodes, and the cloud platform are merely examples. Other existing or future EMAS management nodes, plurality of resource nodes, and cloud platforms that are applicable to embodiments of this application should also fall within the protection scope of embodiments of this application, and should be included herein by reference.

It should be noted that the application scenario and the implementation environment that are described in embodiments of this application are intended to describe the technical solutions in embodiments of this application more clearly, and do not constitute a limitation on the technical solutions provided in embodiments of this application. A person of ordinary skill in the art may be aware that, as a technology evolves and a new application scenario emerges, the technical solutions provided in embodiments of this application are also applicable to a similar technical problem.

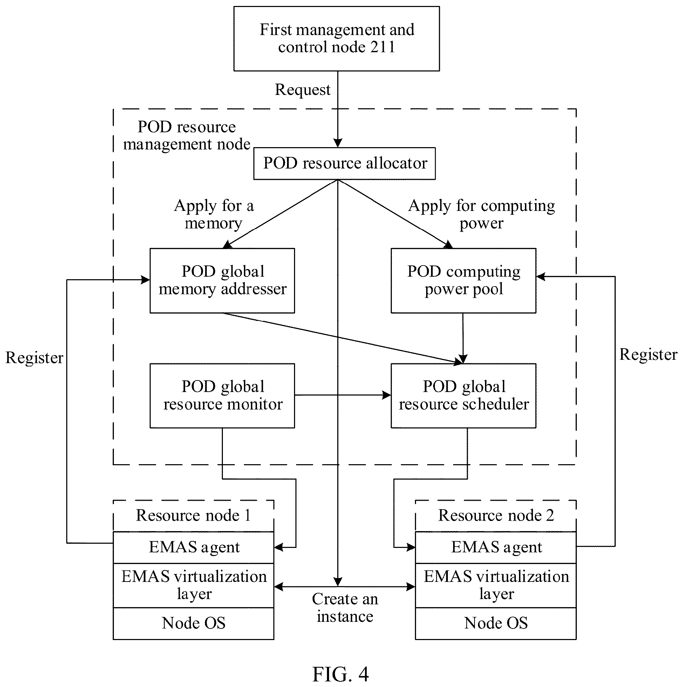

FIG. 4 is a diagram of a structure of a POD resource management node according to an embodiment of this application. The POD resource management node includes a POD resource allocator, a POD global memory allocator, a POD computing power pool, a POD global resource monitor, and a POD global resource scheduler.

The POD resource allocator receives a super instance creation request sent by a first management and control node 211, where the super instance creation instruction includes an identifier of a target resource node and occupation information, and the occupation information indicates a size of a resource that needs to be occupied by a current super instance on each target resource node; and sends the identifier of the target resource node and the occupation information to a POD global memory addresser and the POD computing power pool respectively. The POD global memory addresser records memory resource occupation based on the occupation information, and the POD computing power pool records computing resource occupation based on the occupation information. The POD resource allocator can further send an EMAI creation instruction to a virtualization layer of the target resource node. The POD global memory allocator can further integrate memory resources of a resource node in a POD, record information such as a memory model, a rate, and bandwidth of the resource node, and then perform unified addressing, to implement registration of the resource node, and perform hierarchical management on the resource node by using a data structure like a bitmap (bitmap) or a hash table (hashmap). The POD computing power pool can further integrate computing resources of the resource node in the POD, and record information such as a CPU architecture, a generation, a dominant frequency, and a quantity of cores of the resource node, to implement registration of the resource node. The POD global resource monitor monitors a CPU, memory usage, and bandwidth occupation of the resource node in the POD, to identify a resource node with high resource occupation (overloaded), that is, a hotspot. The POD global resource scheduler can perform resource reallocation across resource nodes based on the hotspot identified by the POD global resource monitor and a real-time global resource status sent by the POD global memory addresser and the POD computing power pool.

The following explains and describes in detail the cloud service providing method provided in embodiments of this application.

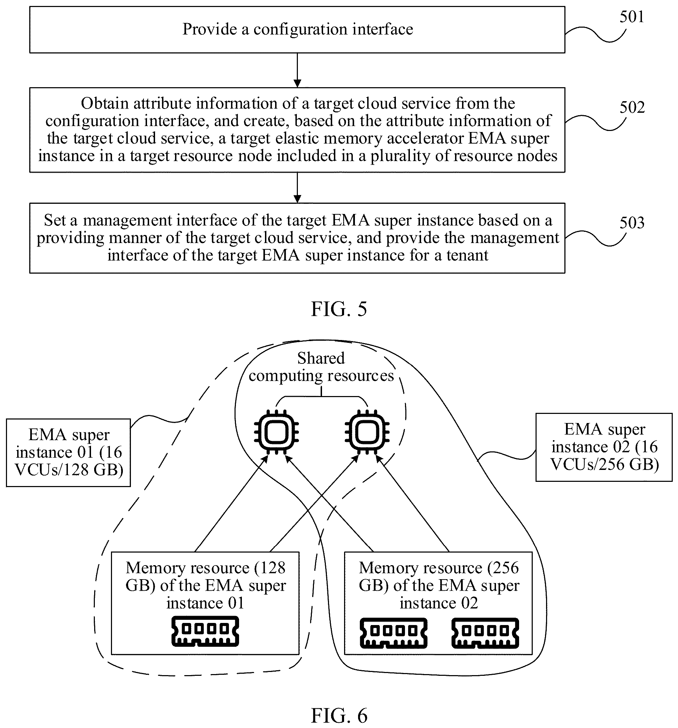

FIG. 5 is a flowchart of a cloud service providing method according to an embodiment of this application. The method is applied to an EMAS management node included in a cloud platform. The cloud platform further includes a plurality of resource nodes, and the resource node is configured to provide at least one of a computing resource and a memory resource. Refer to FIG. 5. The method includes the following steps.

**Step 501:** Provide a configuration interface, where the configuration interface is used to prompt a tenant to input attribute information of a to-be-provided target cloud service based on a service requirement, and the attribute information of the target cloud service includes a providing manner of the target cloud service and performance configuration information of the target cloud service.

In some embodiments, the EMAS management node provides the configuration interface to prompt the tenant to input the attribute information of the to-be-provided target cloud service based on the service requirement. The tenant inputs the providing manner of the target cloud service and the performance configuration information of the target cloud service based on the configuration interface.

In an example, manners of providing the target cloud service may be a super instance providing manner and an instanceless providing manner, and the tenant may select either of the two manners as the providing manner of the target cloud service.

The super instance providing manner means that a target EMA super instance used to provide the target cloud service for the tenant is visible to the tenant, and a life cycle of a target EMA is managed by the tenant. The instanceless providing manner means that a target EMA super instance is invisible to the tenant, and a life cycle of a target EMA is not managed by the tenant.

When manners of providing the target cloud service selected by the tenant are different, the performance configuration information of the target cloud service includes different content. The following separately describes the content.

**First** case: The providing manner of the target cloud service is the super instance providing manner. In this case, the performance configuration information of the target cloud service includes a usage type, a memory capacity, a capacity guarantee mode, a capacity step, a computing resource, and bandwidth. The usage type indicates whether the target EMA super instance provides a service in an attachment form, the memory capacity indicates a memory capacity of the target EMA super instance, the capacity guarantee mode indicates whether a resource node on which a memory resource of the target EMA super instance is distributed is variable, the capacity step indicates a memory size of each EMAI included in the target EMA super instance, the computing resource indicates computing performance of the target EMA super instance, and the bandwidth indicates a data transmission amount of the target EMA super instance in unit time.

In some embodiments, usage types include single-instance usage and attachment usage. The single-instance usage means that the target EMA super instance does not provide the service in the attachment form. The attachment usage means that the target EMA super instance provides the service in the attachment form.

It should be noted that the tenant may directly select one of the two parameters: the single-instance usage and the attachment usage, to determine the usage type. During actual application, the tenant may further determine the usage type of the target cloud service by selecting an image corresponding to the single-instance usage or selecting an image corresponding to the attachment usage. In other words, the usage type of the target cloud service is determined based on an image type. This is not limited in this embodiment of this application.

Optionally, when the usage type is the single-instance usage, the tenant may use the target EMA super instance as a special cloud server, that is, a low-price ultra-large-memory instance. For example, the tenant may attach a data volume to, attach a virtual network interface card to, or add an elastic IP address to the target EMA super instance.

In some embodiments, memory capacities are classified into a guaranteed capacity and a burst capacity. The guaranteed capacity is a minimum memory capacity that needs to be guaranteed by the target EMA super instance, the burst capacity indicates a maximum capacity of the target EMA super instance, and the burst capacity is greater than or equal to the guaranteed capacity.

It should be noted that, during charging, a larger guaranteed capacity indicates a higher price. In addition, when guaranteed capacities are the same, a larger difference between the guarantee capacity and the burst capacity indicates a higher price.

In some embodiments, capacity guarantee modes include a dynamic mode and a static mode. The dynamic mode is a changeable manner, and means that the EMAS management node can split and migrate, based on resource usage of an underlying physical server, an EMAI included in the target EMA super instance. The static mode is an unchangeable manner, and means that after an EMASI is created, the EMASI is not allowed to be split or migrated.

Splitting means that at least two EMAIs are used to provide a resource originally provided by one EMAI. For example, an EMAI 1 on a resource node A provides a memory resource of 8 GB. After splitting, an EMAI 2 on a resource node B may provide a memory resource of 3 GB, and an EMAI 3 on a resource node C may provide a memory resource of 5 GB. That is, the memory resource of 8 GB is finally provided by two EMAIs.

Migration means providing, by using another resource node other than a first resource node, a resource originally provided by the first resource node. For example, the EMASI 1 on the resource node A provides a memory resource of 8 GB, and after migration, the EMAI 2 on the resource node B may provide the memory resource of 8 GB.

Optionally, a default capacity guarantee mode of the EMAS management node is the dynamic mode. In other words, when the tenant does not select a capacity guarantee mode, the default capacity guarantee mode is the dynamic mode. In this way, resources can be scheduled based on the resource usage of the underlying physical server, to fully utilize the resources.

It should be noted that, during charging, a price in the dynamic mode is higher than a price in the static mode.

In some embodiments, the capacity step indicates a minimum value of a memory capacity of each EMASI included in the target EMA super instance, that is, the memory capacity of each EMAI is not less than the capacity step. The capacity step limits a lower limit of a memory capacity specification of all EMAIs that form the EMA super instance. In this case, a quantity of EMAIs that form the EMA super instance is not greater than a value obtained by dividing an actual memory capacity of the EMA super instance by the capacity step.

For example, if the target EMA super instance requires the memory capacity of 128 GB, and the capacity step is set to 32 GB, a memory capacity of the EMAIs that form the target EMA super instance is greater than or equal to 32 GB. In this case, the target EMA super instance includes a maximum of four EMAIs.

Optionally, if the tenant sets the capacity step to 0, it does not mean that a resource quantity of memory resources corresponding to each EMASI is 0. Instead, it means that the EMAS management node can create the EMASI for the tenant based on the resource usage of the underlying physical server without being constrained by the capacity step. A size of the memory resource of the EMASI is related to a size of a resource actually allocated by the EMAS management node. For example, the EMAS management node can preferentially create an EMASI on a resource node with a small memory capacity based on the resource usage of the underlying physical server.

It should be noted that, a default capacity step of the EMAS management node is 0. In other words, when the tenant does not select a capacity step, the EMAS management node can create the EMASI for the tenant based on the resource usage of the underlying physical server.

It should be noted that, during charging, a larger capacity step indicates a higher price.

For example, the bandwidth may be an amount of data transmitted per second of the target EMA super instance, and a unit is GB per second. Certainly, during actual application, the bandwidth may alternatively be represented in another form. This is not limited in this embodiment of this application.

It should be noted that, during charging, larger bandwidth indicates a higher price.

In some embodiments, a unit of the computing resource is a virtual computing unit (virtual CPU unit, VCU). One VCU may be one core in one physical CPU or data processing unit (Data Processing Unit, DPU), or may be one hyper-thread of one core in one physical CPU or DPU. This is not limited in this embodiment of this application.

It should be noted that the VCU may be a computing resource used only by the target EMA super instance, or may be a computing resource shared with another EMA super instance. This is not limited in this embodiment of this application. For example, if the target EMA super instance includes a computing resource of one VCU, an EMA super instance 1 and the target EMA super instance may share the computing resource of one VCU. For example, with reference to FIG. 6, a memory resource of an EMA super instance 01 is 128 GB, and a computing resource is 16 VCUs; a memory resource of an EMA super instance 02 is 256 GB, and a computing resource is 16 VCUs. A usage type of the EMA super instance 01 and the EMA super instance 02 is the single-instance usage, the EMA super instance 01 and the EMA super instance 02 share the computing resource of 16 VCUs, and the EMA super instance 01 and the EMA super instance 02 do not share the memory resource.

Optionally, a default computing resource of the EMAS management node is one VCU. In other words, when the tenant does not set a computing resource, the default computing resource is one VCU.

Based on the foregoing descriptions, the usage type includes the single-instance usage and the attachment usage. When the usage types are different, the performance configuration information of the target cloud service may further include some different information. The following separately describes the information.

Case **1:** The usage type is the single-instance usage, that is, the usage type indicates that the target EMA super instance does not provide the service in the attachment form. In this case, the performance configuration information of the target cloud service further includes a latency specification and a placement policy. The latency specification indicates access latency of the memory resource of the target EMA super instance, and the placement policy indicates whether the memory resource and the computing resource of the target EMA super instance are located on a same resource node

In some embodiments, the latency specification includes performance first or cost first. Performance first means that the EMAS management node selects a resource node with lowest latency from the plurality of resource nodes as a target resource node. Cost first means that the EMAS management node selects a resource node with a lower price from the plurality of resource nodes as a target resource node.

For example, one target resource node is currently required, but five resource nodes all meet requirements of the memory capacity, the capacity step, the computing resource, and the bandwidth that are configured by the tenant. In this case, if the tenant selects performance first, the EMAS management node can select one resource node with lowest memory resource access latency from the five resource nodes as the target resource node. If the tenant selects cost first, the EMAS management node can determine a price of each resource node according to a related algorithm, and then select one resource node with a lowest price from the five resource nodes as the target resource node.

During actual application, in addition to directly selecting performance first or cost first, the tenant may further input a specific latency threshold, to determine the latency specification. In this case, the EMAS management node determines the target resource node based on the latency threshold, and finally obtained access latency of the memory resource of the target EMA super instance is not greater than the latency threshold.

For example, the latency threshold input by the tenant may be 100 milliseconds. One target resource node is currently required, but five resource nodes all meet requirements of the memory capacity, the capacity step, the computing resource, and the bandwidth that are configured by the tenant. In this case, a resource node whose latency is less than or equal to the latency threshold may be selected from the five resource nodes as the target resource node.

It should be noted that if latency of at least two of the five resource nodes is less than or equal to the latency threshold, a resource node may be randomly selected from the at least two resource nodes as the target resource node, or a resource node with a lowest price is selected from the two resource nodes as the target resource node, or a resource node with best performance is selected from the two resource nodes as the target resource node. This is not limited in this embodiment of this application.

Optionally, a default latency specification of the EMAS management node is cost first. In other words, when the tenant does not select a latency specification, the default latency specification is cost first. Because a resource with low usage is usually at a lower price, the EMAS management node can schedule, based on the resource usage of the underlying physical server, a resource with a lower price that is selected for the tenant, to fully utilize the idle resource in the data center.

In some embodiments, placement policies include affinity and anti-affinity. Affinity means that the memory resource and the computing resource of the target EMA super instance are located on the same resource node, and anti-affinity means that the memory resource and the computing resource of the target EMA super instance are not located on the same resource node.

It should be noted that if the tenant does not fill in the placement policy, the EMAS management node may determine, based on the resource usage of the underlying physical server, a resource node on which the computing resource and the memory resource of the target EMA super instance are located.

Case **2:** The usage type is the attachment usage, that is, the usage type indicates that the target EMA super instance provides the service in the attachment form. In this case, the performance configuration information of the target cloud service further includes an identifier of at least one target instance, a latency specification, a placement policy, an access policy, and a usage mode, where the target instance is an instance used to attach the target EMA super instance, the latency specification indicates latency of accessing the target EMA super instance by the target instance, the placement policy indicates whether the target EMA super instance and a first instance are located on a same resource node, the first instance is one of the at least one target instance, the access policy indicates read/write permission of the at least one target instance on the target EMA super instance, the usage mode indicates a memory addressing manner of the target EMA super instance and a second instance, and the second instance is one of the at least one target instance.

It should be noted that the target instance may be a virtual machine instance, a bare metal server instance, or a container instance, and the target instance needs to be created by using an image that supports an EMA capability.

In some embodiments, the latency specification includes performance first or cost first. Performance first means that the EMAS management node selects, from the plurality of resource nodes, a resource node with lowest access latency of the target instance as a target resource node. Cost first means that the EMAS management node selects a resource node with a lower price from the plurality of resource nodes as a target resource node.

For example, one target resource node is currently required, but five resource nodes all meet requirements of the memory capacity, the capacity step, the computing resource, and the bandwidth that are configured by the tenant. In this case, if the tenant selects performance first, the EMAS management node can select, from the five resource nodes according to a related algorithm, one resource node with lowest access latency of the target instance as the target resource node. If the tenant selects cost first, the EMAS management node can determine a price of each resource node according to a related algorithm, and then select one resource node with a lowest price from the five resource nodes as the target resource node.

During actual application, in addition to directly selecting performance first or cost first, the tenant may further input a specific latency threshold, to determine the latency specification. In this case, the EMAS management node determines the target resource node based on the latency threshold, so that the latency of accessing the target EMA super instance by the target instance is not greater than the latency threshold.

For example, the latency threshold input by the tenant may be 100 milliseconds. One target resource node is currently required, but five resource nodes all meet requirements of the memory capacity, the capacity step, the computing resource, and the bandwidth that are configured by the tenant. In this case, a resource node whose access latency of the target instance is less than or equal to the latency threshold may be selected from the five resource nodes as the target resource node.

It should be noted that if latency of at least two of the five resource nodes is less than or equal to the latency threshold, a resource node may be randomly selected from the at least two resource nodes as the target resource node, or a resource node with a lowest price is selected from the two resource nodes as the target resource node, or a resource node with best performance is selected from the two resource nodes as the target resource node. This is not limited in this embodiment of this application.

Optionally, a default latency specification of the EMAS management node is cost first. In other words, when the tenant does not select a latency specification, the default latency specification is cost first. Because a resource with low usage is usually at a lower price, the EMAS management node can schedule, based on the resource usage of the underlying physical server, a resource with a lower price that is selected for the tenant, to fully utilize the idle resource in the data center.

In some embodiments, placement policies include affinity and anti-affinity. Affinity means that the target EMA super instance and the first instance are located on the same resource node, and anti-affinity means that the target EMA super instance and the first instance are not located on the same resource node.

It should be noted that if the tenant selects the placement policy, the tenant further needs to input an identifier of the first instance, so that the EMAS management node determines a location at which the first instance is deployed. If the tenant does not fill in the placement policy, the EMAS management node may determine, based on the resource usage of the underlying physical server, a resource node on which the computing resource and the memory resource of the target EMA super instance are located.

In some embodiments, access policies include private, shared read-only, and shared read/write. Private means that when a quantity of target instances is 1, the target instance has read/write permission on the target EMA super instance. Shared read-only means that when a quantity of target instances to which the target EMA super instance is attached is greater than or equal to 2, a primary attached instance in the at least two target instances has read/write permission, and another target instance has only read-only permission. Shared read/write means that when a quantity of target instances to which the target EMA super instance is attached is greater than or equal to 2, the at least two target instances have read/write permission.

It should be noted that, when the tenant inputs only an identifier of one target instance, the access policy is set to private by default. In addition, when the access policy is set to shared read-only, the tenant needs to input an identifier of the primary attachment instance.

In some embodiments, usage modes include a full peer-to-peer mode, a semi-peer-to-peer mode, and a heterogeneous mode. The full peer-to-peer mode means that a guest OS is fully managed. In other words, a total memory of the second instance includes a local memory of the second instance and a memory of the target EMA super instance, and the local memory of the second instance and the memory of the target EMA super instance are uniformly addressed. The semi-peer-to-peer mode means that a guest OS is partially managed. In other words, a total memory of the second instance includes a local memory of the second instance and a memory of the target EMA super instance, the local memory of the second instance and the memory of the target EMA super instance are uniformly addressed, but a user can learn of an address segment corresponding to the local memory of the second instance and an address segment corresponding to the memory of the target EMA super instance. In the heterogeneous mode, a memory pool of the EMA super instance of a guest OS is not managed, and unified addressing is not performed. The EMA super instance is similar to another non-uniform memory access (Non-uniform memory access, NUMA) architecture node, and the tenant or an authorized user is responsible for resource management.

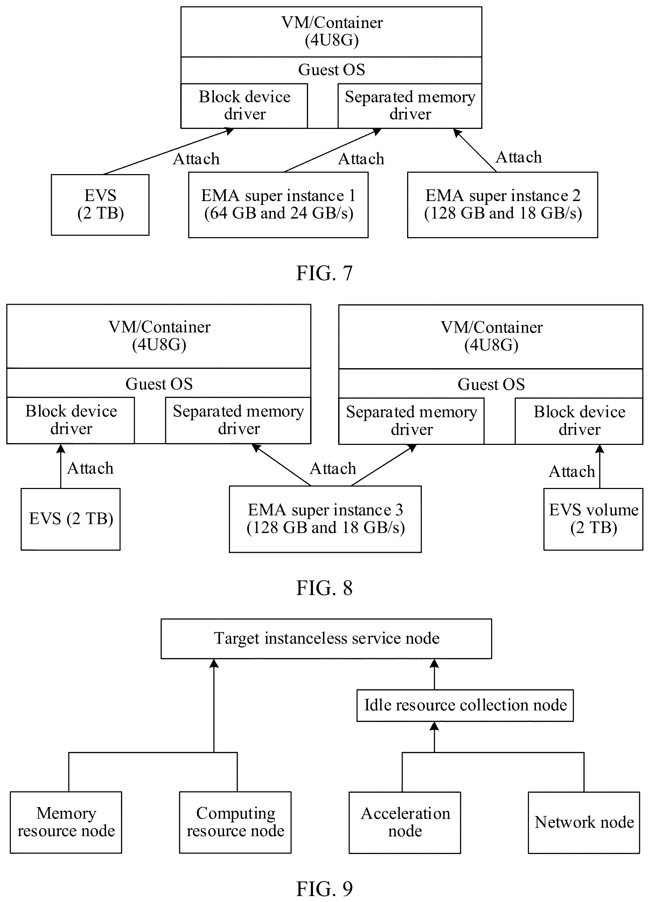

Optionally, the EMA super instance may be attached to a virtual machine or a container, and two EMA super instances may be attached to a same virtual machine or container. For example, with reference to FIG. 7, an elastic volume service (Elastic Volume Service) of 2 terabytes (Terabytes, TB), that is, a cloud disk of 2 TB, an EMA super instance 1, and an EMA super instance 2, is attached to the virtual machine or the container. In some embodiments, an EMA super instance 3 may also support sharing. Refer to FIG. 8. The EMA super instance 3 may be attached to two virtual machines or containers.

**Second** case: The providing manner of the target cloud service is an instanceless providing manner. In this case, the performance configuration information of the target cloud service includes a service type, a performance specification, a maximum quantity of concurrent connections, and a price upper limit, where the service type indicates a requirement of a service of the tenant for a memory resource and a computing resource, the performance specification indicates a quantity of target EMA super instances, the maximum quantity of concurrent connections indicates a quantity of instances that can be connected to the target EMA super instance at a same moment, and the price upper limit indicates an upper limit of a resource provided by the cloud platform for the tenant.

In some embodiments, service types include memory expansion, computing power offloading, and caching. Different service types have different performance requirements on the target EMA super instance. Caching requires high bandwidth, and has low requirements on the computing resource and a latency specification. Memory expansion has requirements on the computing resource and a memory capacity. Computing power offloading has a low requirement on the computing resource. Certainly, during actual application, there may be another service type that can reflect a service scenario. This is not limited in this embodiment of this application.

For example, performance specifications include standard, high performance, and best effort (best effort). In a standard specification, the quantity of target EMA super instances is related to a quantity of instances connected to the target EMA super instance, and the quantity of instances connected to the target EMA super instance is greater than the quantity of target EMA super instances. In a high performance specification, a quantity of instances connected to the target EMA super instance is equal to the quantity of EMA super instances, that is, an instance connected to each target EMA super instance corresponds to one target EMA super instance. In a best effort specification, there is only one target EMA super instance, that is, a quantity of all instances connected to the target EMA super instance shares one target EMA super instance.

It should be noted that if the tenant does not fill in the performance specification or the maximum quantity of concurrent connections, the EMAS management node may dynamically adjust the quantity of target EMA super instances and the maximum quantity of concurrent connections based on resource usage of an underlying physical server.

Optionally, a unit of the price upper limit may be yuan per hour, yuan per month, or yuan per year. A charging periodicity of the price upper limit is not limited in this embodiment of this application.

In some embodiments, after the tenant determines the service type, the performance specification, and the maximum quantity of concurrent connections, the EMAS management node can determine, according to a related algorithm, a basic price corresponding to the service type, the performance specification, and the maximum quantity of concurrent connections that are configured by the tenant, where the price upper limit filled by the tenant is greater than or equal to the basic price.

Optionally, the EMAS management node stores a correspondence between the service type and a service price, a correspondence between the performance specification and a first price coefficient, and a correspondence between the maximum quantity of concurrent connections and a second price coefficient. A target service price corresponding to the service type configured by the tenant can be determined based on the service type configured by the tenant. A target first price coefficient and a target second price coefficient can be determined from the correspondence between the performance specification and the first price coefficient and the correspondence between the maximum quantity of concurrent connections and the second price coefficient based on the performance specification and the maximum quantity of concurrent connections that are configured by the tenant. The target service price is multiplied by the target first price coefficient and then multiplied by the target second price coefficient, to obtain a basic price corresponding to the service type, the performance specification, and the maximum quantity of concurrent connections that are configured by the tenant. Certainly, the foregoing manner of determining the basic price is merely an example. During actual application, the basic price may alternatively be determined by using another method. This is not limited in this embodiment of this application.

**Step 502:** Obtain the attribute information of the target cloud service from the configuration interface, and create, based on the attribute information of the target cloud service, the target EMA super instance in the target resource node included in the plurality of resource nodes, where the target EMA super instance is used to provide the target cloud service for the tenant, the target resource node includes at least one resource node, and an available resource of the target resource node meets the service requirement of the tenant.

Attribute information of an available resource of each resource node in each resource pool is obtained. The target resource node is determined from the plurality of resource nodes based on the attribute information of the available resource of each resource node in each resource pool and the attribute information of the target cloud service, where all resource nodes in the target resource node are located in a same resource pool. An elastic memory accelerator instance EMAI is created in each resource node included in the target resource node, to obtain one or more EMAIs. The target EMA super instance is obtained based on the one or more EMAIs.

In some embodiments, a configuration parameter of the target cloud service may be determined based on the attribute information of the target cloud service, and the target resource node may be determined from the plurality of resource nodes based on the configuration parameter of the target cloud service and the attribute information of the available resource of each resource node in each resource pool.

When manners of providing the target cloud service are different, manners of determining the configuration parameter of the target cloud service are different. The following separately describes the manners.

**First** case: The providing manner of the target cloud service is the super instance providing manner. In this case, the performance configuration information of the target cloud service may be directly used as the configuration parameter of the target cloud service.

**Second** case: The providing manner of the target cloud service is the instanceless providing manner. In this case, the EMAS management node stores a correspondence between the service type and the configuration parameter of the target cloud service. The configuration parameter of the target cloud service includes a guaranteed capacity, a burst capacity, a computing resource, a capacity step, bandwidth, a latency specification, a guarantee mode, and a placement policy. The EMAS management node can determine the configuration parameter of the target cloud service from the correspondence between the service type and the configuration parameter of the target cloud service based on the service type configured by the tenant.

There are a plurality of implementations of determining the target resource node from the plurality of resource nodes based on the attribute information of the available resource of each resource node in each resource pool and the configuration parameter of the target cloud service. In some embodiments, the target resource node may be determined by using an algorithm like first fit (first fit) or best fit (best fit). This is not limited in this embodiment of this application.

It should be noted that, in addition to obtaining the attribute information of the target cloud service from the configuration interface, the attribute information of the target cloud service may alternatively be obtained through API invoking, email exchange, or work order exchange, or in another manner. This is not limited in this embodiment of this application.

**Step 503:** Set a management interface of the target EMA super instance based on the providing manner of the target cloud service, and provide the management interface of the target EMA super instance for the tenant.

In some embodiments, the EMAS management node can send an SDK corresponding to the providing manner of the target cloud service to the tenant, and the tenant can use the target EMA super instance based on the SDK. The SDK can indicate a method for using the target EMA super instance.

During actual application, when the providing manner of the target cloud service is the instanceless providing manner, the EMAS management node can create a target instanceless service node, and return an identifier of the target instanceless service node to the tenant. A bottom layer of the target instanceless service node is the target EMA super instance. In this case, an SDK corresponding to the instanceless providing manner includes an EMA service installation package. The tenant can install an EMA server for an instance that needs to be connected to the target EMA super instance, and configure a backend target of the EMA server as the target instanceless service node based on the SDK and the identifier of the target instanceless service node.

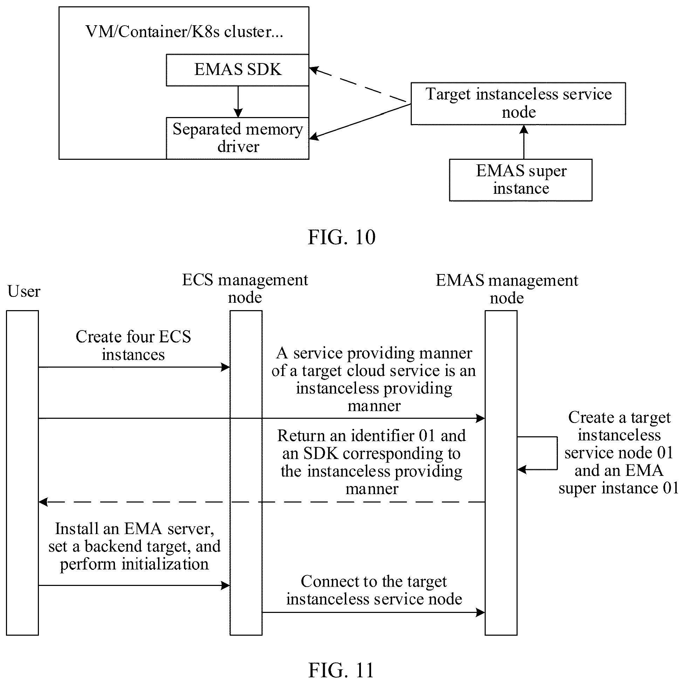

For example, with reference to FIG. 9, when the providing manner of the target cloud service is the instanceless providing manner, a resource of the target instanceless service node may be a resource of a memory resource node or a resource of a computing resource node. In some embodiments, the resource of the target instanceless service node may alternatively be a resource that is from a DPU or another device and that is collected via an idle resource collection node, for example, an idle resource of an acceleration node and a network node. Refer to FIG. 10. The target EMA super instance still provides a resource for the target instanceless service node, but the target EMA super instance is transparent to the tenant, and the EMAS management node can gradually allocate a resource to the target EMA super instance. In other words, when there is a request and the price upper limit is met, the resource is allocated to the target EMA super instance based on a resource required by the request, or when there is no request, the resource is not allocated to the target EMA super instance. That is, the resource allocated by the EMAS management node to the target EMA super instance depends on a quantity of resources actually required by the tenant. The EMAS management node can continuously provide resources within the price upper limit. Once the price upper limit is reached, the EMAS management node rejects the request or replaces historical data in a memory with new data by using a memory page swapping technology (swap) and a least recently used (least recently used, LRU) algorithm.

The following describes again, by using three examples, the cloud service providing method provided in embodiments of this application.

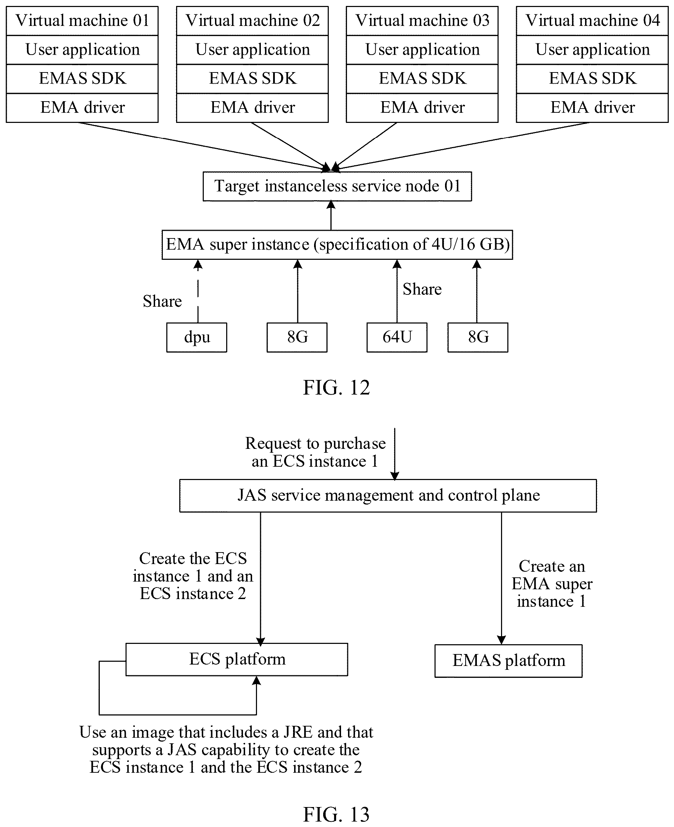

In a first example, with reference to FIG. 11, a tenant first creates four ECS instances, namely, a virtual machine 01, a virtual machine 02, a virtual machine 03, and a virtual machine 04, via an ECS management node included in a cloud platform. Images of the four ECS instances support an EMA capability, so that the tenant can input attribute information of a target cloud service on a configuration interface provided by an EMAS management node, where a service providing manner of the target cloud service is an instanceless providing manner, a service type included in performance configuration information of the target cloud service is computing power offloading, a performance specification is standard, a maximum quantity of concurrent connections is 4, and a price upper limit is 20.98 yuan/hour, as shown in FIG. 12. The EMAS management node creates a target instanceless service node 01 and an EMA super instance 01 based on the attribute information of the target cloud service, and returns an identifier 01 of the target instanceless service node and an SDK corresponding to the instanceless providing manner to the tenant. The tenant can install an EMA server on the ECS instance based on the SDK corresponding to the instanceless providing manner and the identifier 01 of the target instanceless service node, and set a backend target of the EMA server as the target instanceless service node, to connect the four ECS instances to the target instanceless service node, and further offload, to the EMA super instance 01, a computing operation that needs to be offloaded in a service. The computing operation that needs to be offloaded may be an operation like network unpacking/unpacking, encryption/decryption, and another input/output operation. It should be noted that FIG. 12 is merely an example. During actual application, a backend of the target instanceless service node 01 is not necessarily one EMA super instance, and a quantity of EMA super instances can be flexibly adjusted based on the performance configuration information that is of the target cloud service and that is set by the tenant.

In a second example, if a tenant needs to perform, by using an ECS instance 1, computing work brought by a Java application deployed on the ECS instance 1, the ECS instance 1 further needs to perform a memory garbage collection function, and execution of the garbage collection function affects service execution efficiency. To improve performance of the Java application, a cloud platform can provide a virtual machine-based Java runtime environment accelerating service (Java Runtime Environment accelerating service, JAS), which is also referred to as a Java application performance optimization service. The JAS can provide a service for the tenant according to the cloud service providing method provided in embodiments of this application.

In this case, the cloud platform includes a JAS management node, an ECS management node, and an EMAS management node, as shown in FIG. 13. The tenant purchases the ECS instance 1 via the JAS management node and inputs an offloading service type, where the offloading service type is a computing type that needs to be offloaded by the ECS instance 1. In the foregoing case, the offloading service type is a garbage collection offloading service. The JAS management node can invoke the ECS management node to create the ECS instance 1. The ECS management node uses an image that includes a Java runtime environment (Java Runtime Environment, JRE) and that supports a JAS capability to create the ECS instance 1 and an ECS instance 2. The ECS instance 1 is used to perform computing work brought by a Java application deployed on the ECS instance 1, and the ECS instance 2 is used to perform a garbage collection function.

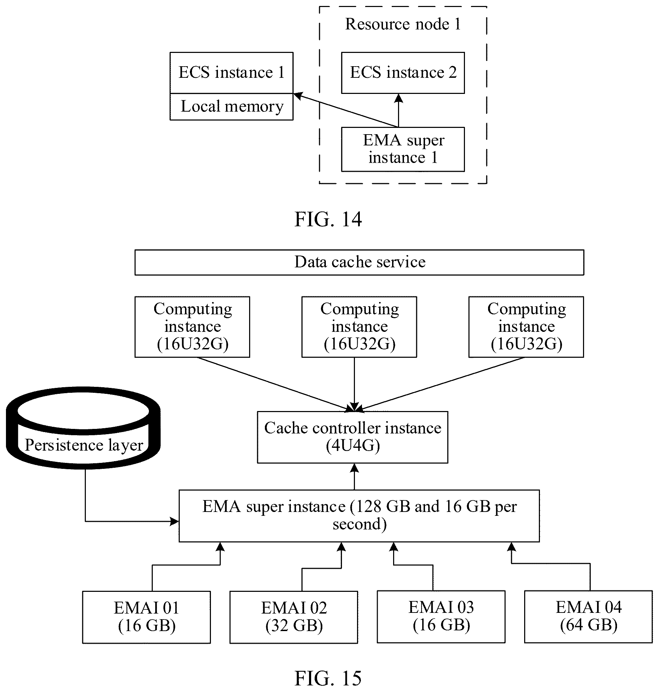

In some embodiments, the JAS management node stores a correspondence between the offloading service type and attribute information of a target cloud service. The attribute information includes a providing manner of the target cloud service and performance configuration information of the target cloud service. The performance configuration information includes a guaranteed capacity, a burst capacity, a capacity guarantee mode, bandwidth, a latency specification, an access policy, and a usage type. The JAS management node can determine the attribute information of the target cloud service from the correspondence. A providing manner of a target cloud service corresponding to the garbage collection offloading service is a super instance providing manner. A guaranteed capacity is 64 GB, a burst capacity is 64 GB, a capacity guarantee mode is a static mode, bandwidth is 12 GB per second, a latency specification is performance first, an access policy is shared read/write, a usage type is attachment usage, target instances are the ECS instance 1 and the ECS instance 2, and a placement policy is affinity with the ECS instance 2. The JAS management node can determine attribute information of the target cloud service based on the garbage collection offloading service, and then send the attribute information of the target cloud service to the EMAS management node. Refer to FIG. 14. The EMAS management node can create an EMA super instance 1 based on the attribute information of the target cloud service. The EMA super instance 1 and the ECS instance 2 are located on a same resource node, that is, a resource node 1. The JAS management node invokes the EMAS management node to attach the EMA super instance 1 to the ECS instance 1 and the ECS instance 2.

The tenant can directly operate the ECS instance 1, which is responsible for computing work of the application. A local memory of the ECS instance 1 is equivalent to a high-speed memory buffer. The EMA super instance 1 stores complete local memory information of the ECS instance 1. The ECS instance 2 can perform garbage collection on a memory in the EMA super instance 1, and synchronize a garbage collection result to the local memory of the ECS instance 1, so that the ECS instance 2 assists the ECS instance 1 in completing the garbage collection function.

Considering that computing resource performance of the EMA super instance 1 is insufficient, the ECS instance 2 is created in the second example, and garbage collection is performed by using the ECS instance 2. The EMA super instance 1 is used to synchronize the local memory information of the ECS instance 1. During actual application, if the EMA super instance 1 has high computing resource performance, the ECS instance 2 does not need to be created, and garbage collection is directly performed by using the EMA super instance 1.

In a third example, with reference to FIG. 15, a cloud platform can provide a data cache service, and a tenant can purchase an ultra-cost-effective memory cache service by using the data cache service. The data cache service can provide a service for the tenant according to the cloud service providing method provided in embodiments of this application. The data cache service may be a memory architecture and system (Memory Architecture and System, memArts), or may be another type of data cache service during actual application. This is not limited in this embodiment of this application.

The tenant purchases a memory cache service via a data cache service management node, and specifies attribute information of a target cloud service. A providing manner of the target cloud service is a super instance providing manner, a guaranteed capacity is 128 GB, a burst capacity is 128 GB, a capacity guarantee mode is a dynamic mode, bandwidth is 16 GB per second, a latency specification is cost first, an access policy is private, and a usage type is attachment usage. In this case, the data cache service management node invokes an EMAS management node to create an EMA super instance 2. Because the latency specification is cost first, a resource node with a smallest resource specification in resource nodes that meet the attribute information of the target cloud service is preferentially selected as a target resource node. A data cache service management and control plane invokes an ECS management node to create an ECS instance as a cache controller for the tenant. A cache controller instance is responsible for maintaining synchronization between cache data and data at a persistence layer. The cache controller instance uses an image that supports the data cache service and that is provided by the data cache service, to ensure that an ECS includes a server of the data cache service. The data cache service management node invokes the EMAS management node to attach the EMA super instance to the cache controller instance. The EMAS management node sets a management interface of a target EMA super instance based on the providing manner of the target cloud service, and sends an SDK corresponding to the providing manner of the target cloud service to the tenant, so that the tenant can use the target EMA super instance based on the SDK.

During actual application, after the management interface is provided for the tenant, the EMAS management node can further determine, based on resource usage of the target EMA super instance by the tenant, whether a resource of the target EMA super instance is overloaded; when determining that the resource of the target EMA super instance is overloaded, determine, based on the attribute information of the target cloud service, whether a resource provided by the cloud platform for the target EMA super instance reaches a configured resource upper limit; and adjust the target resource node when the resource provided by the cloud platform for the target EMA super instance does not reach the configured resource upper limit.

In some embodiments, the resource of the target EMA super instance includes a memory resource and a computing resource. Whether the memory resource of the target EMA super instance is overloaded is determined based on memory resource usage of the target EMA super instance by the tenant, and whether the computing resource of the target EMA super instance is overloaded is determined based on computing resource usage of the target EMA super instance. When it is determined that the memory resource and/or the computing resource of the target EMA super instance is overloaded, it is determined that the resource of the target EMA super instance is overloaded.

In some embodiments, the memory resource usage includes a memory occupation ratio. If the memory occupation ratio is greater than a memory ratio threshold, it is determined that the memory resource of the target EMA super instance is overloaded. Otherwise, it is determined that the memory resource of the target EMA super instance is not overloaded.

The memory ratio threshold is preset, and a value range of the memory ratio threshold is [0, 1]. For example, the memory ratio threshold may be set to 0.8, that is, when the memory resource usage ratio of the target EMA super instance is greater than 0.8, it is determined that the memory resource of the target EMA super instance is overloaded. Certainly, during actual application, the memory ratio threshold may alternatively be adjusted as required.

In some embodiments, the computing resource usage includes a computing resource occupation ratio, a quantity of queued requests, and response time. If the computing resource occupation ratio is less than a computing resource ratio threshold, the quantity of queued requests is less than a queue quantity threshold, and the response time is less than a response time threshold, it is determined that the computing resource of the target EMA super instance is not overloaded. Otherwise, it is determined that the computing resource of the target EMA super instance is overloaded.

Certainly, during actual application, the computing resource usage may alternatively include at least one of the computing resource occupation ratio, the quantity of queued requests, and the response time. This is not limited in this embodiment of this application.

The computing resource ratio threshold, the queue quantity threshold, and the response time threshold are preset. During actual application, the computing resource ratio threshold, the queue quantity threshold, and the response time threshold may alternatively be adjusted as required.

When manners of providing the target cloud service are different, implementations of determining whether the resource provided by the cloud platform for the target EMA super instance reaches the configured resource upper limit are different. The following separately describes the implementations.

When the providing manner of the target cloud service is the instanceless providing manner, resource configuration information provided by the current cloud platform for the target EMA super instance is obtained. A price corresponding to a configuration corresponding to the resource configuration information is determined based on the resource configuration information and according to a related algorithm. If the price corresponding to the configuration is greater than or equal to the price upper limit, it is determined that the resource provided by the cloud platform for the target EMA super instance has reached the configured resource upper limit. Otherwise, it is determined that the resource provided by the cloud platform for the target EMA super instance does not reach the configured resource upper limit.

When the resource of the target EMA super instance is overloaded, it means that the memory resource of the target EMA super instance is overloaded and/or the computing resource of the target EMA super instance is overloaded. Therefore, when the providing manner of the target cloud service is the super instance providing manner, if types of overloaded resources are different, manners of determining whether the resource provided by the cloud platform for the target EMA super instance reaches the configured resource upper limit are different. The following separately describes the manners.

When it is determined that the memory resource of the target EMA super instance is overloaded, resource configuration information provided by the current cloud platform for the target EMA super instance is obtained. The configuration information includes a deployed memory capacity. If the deployed memory capacity is greater than or equal to a burst memory capacity, it is determined that the resource provided by the cloud platform for the target EMA super instance reaches the configured resource upper limit.

When it is determined that the computing resource of the target EMA super instance is overloaded, resource configuration information provided by the current cloud platform for the target EMA super instance is obtained. The configuration information includes a deployed computing resource specification. If the deployed computing resource specification is greater than or equal to a computing resource specification configured by the tenant, it is determined that the resource provided by the cloud platform for the target EMA super instance reaches the configured resource upper limit.

When it is determined that both the memory resource and the computing resource of the target EMA super instance are overloaded, resource configuration information provided by the current cloud platform for the target EMA super instance is obtained. The configuration information includes a deployed computing resource specification and a deployed memory capacity. If the deployed computing resource specification is greater than or equal to a computing resource specification configured by the tenant and/or the deployed memory capacity is greater than or equal to a burst memory capacity, it is determined that the resource provided by the cloud platform for the target EMA super instance reaches the configured resource upper limit.

Optionally, when the resource provided by the cloud platform for the target EMA super instance reaches the configured resource upper limit, prompt information is sent to the tenant, where the prompt information indicates that the resource provided by the cloud platform for the target EMA super instance has reached the configured resource upper limit.

When the providing manner of the target cloud service is the super instance providing manner and the target EMA super instance provides a service in an attachment form, if another EMA super instance or a system volume (for example, an EVS) is further attached to an instance to which the target EMA super instance is attached, and a remaining storage capacity of the another EMA super instance or the system volume is greater than or equal to a data amount in the target EMA super instance, the tenant may further trigger a hot detachment instruction. The EMAS management node responds to the hot detachment instruction, and may migrate data in the target EMA super instance to a migration destination, to implement hot detachment of the target EMA super instance. The migration destination is another EMA super instance or a system volume that is attached to the instance to which the target EMA super instance is attached and that is other than the target EMA super instance.

In some embodiments, an implementation process of migrating the data in the target EMA super instance to the migration destination includes: setting a state of the target EMA super instance to being detached; performing data packetization on data in the target EMA super instance according to a related algorithm, to obtain a plurality of data packages; marking data attributes respectively corresponding to the plurality of data packages, where the data attributes indicate an access frequency of data in the data packages; and migrating the plurality of data packages to the migration destination based on the data attributes of the plurality of data packages.

The data attributes include cold data, warm data, and hot data. A frequency at which the cold data is accessed is less than a frequency at which the warm data is accessed, and the frequency at which the warm data is accessed is less than a frequency at which the hot data is accessed.

An implementation process of migrating the plurality of data packages to the migration destination based on the data attributes of the plurality of data packages includes: packaging data packages whose data attributes are cold data and warm data and copying the data packages to the migration destination, and copying data packages whose data attributes are hot data to the migration destination for a plurality of times according to a related algorithm.

It should be noted that, if both the another EMA super instance and the system volume are attached to the instance to which the target EMA super instance is attached, the another EMA super instance is preferentially used as the migration destination.

In this embodiment of this application, the attribute information of the target cloud service is input by the tenant based on the service requirement. In other words, the tenant may directly customize a computing resource and a memory resource of the target cloud service based on the service requirement of the tenant, without being limited by a preset specification, to meet the requirement of the tenant and improve performance of the cloud service. In addition, the target resource node includes a plurality of resource nodes, in other words, in this embodiment of this application, resources of the at least one resource node can be integrated to provide a service for the tenant. In this way, while the user requirement is met, utilization of an idle resource in a data center can be effectively improved, and a resource waste and operation and maintenance costs of a cloud service provider can be reduced.

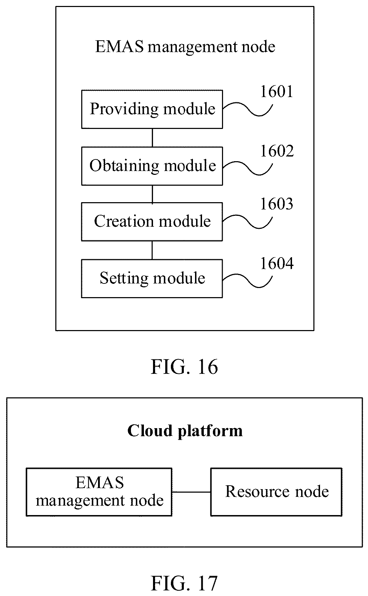

FIG. 16 is a diagram of a structure of an EMAS management node according to an embodiment of this application. The EMAS management node is an EMAS management node included in a cloud platform, and the cloud platform further includes a plurality of resource nodes. Refer to FIG. 16. The EMAS management node includes a providing module 1601, an obtaining module 1602, a creation module 1603, and a setting module 1604.

The providing module 1601 is configured to provide a configuration interface, where the configuration interface is used to prompt a tenant to input attribute information of a to-be-provided target cloud service based on a service requirement, and the attribute information includes a providing manner of the target cloud service and performance configuration information of the target cloud service. For a detailed implementation process, refer to corresponding content in the foregoing embodiments. Details are not described herein again.

The obtaining module 1602 is configured to obtain the attribute information of the target cloud service from the configuration interface. For a detailed implementation process, refer to corresponding content in the foregoing embodiments. Details are not described herein again.

The creation module 1603 is configured to create, based on the attribute information of the target cloud service, a target elastic memory accelerator EMA super instance in a target resource node included in the plurality of resource nodes, where the target EMA super instance is used to provide the target cloud service for the tenant, the target resource node includes at least one resource node, and an available resource of the target resource node meets the service requirement. For a detailed implementation process, refer to corresponding content in the foregoing embodiments. Details are not described herein again.

The setting module 1604 is configured to set a management interface of the target EMA super instance based on the providing manner of the target cloud service, and provide the management interface for the tenant. For a detailed implementation process, refer to corresponding content in the foregoing embodiments. Details are not described herein again.

Optionally, the providing manner of the target cloud service is a super instance providing manner, and the super instance providing manner means that the target EMA super instance is visible to the tenant and a life cycle of the target EMA is managed by the tenant. The performance configuration information of the target cloud service includes a usage type, a memory capacity, a capacity guarantee mode, a capacity step, a computing resource, and bandwidth, where the usage type indicates whether the target EMA super instance provides a service in an attachment form, the memory capacity indicates a memory capacity of the target EMA super instance, the capacity guarantee mode indicates whether a resource node on which a memory resource of the target EMA super instance is distributed is variable, the capacity step indicates a memory size of each elastic memory accelerator instance EMAI included in the target EMA super instance, the computing resource indicates computing performance of the target EMA super instance, and the bandwidth indicates a data transmission amount of the target EMA super instance in unit time.

Optionally, when the usage type indicates that the target EMA super instance does not provide the service in the attachment form, the performance configuration information of the target cloud service further includes a latency specification and a placement policy, the latency specification indicates access latency of the memory resource of the target EMA super instance, and the placement policy indicates whether the memory resource and the computing resource of the target EMA super instance are located on a same resource node.

Optionally, when the usage type indicates that the target EMA super instance provides the service in the attachment form, the performance configuration information of the target cloud service further includes an identifier of at least one target instance, a latency specification, a placement policy, an access policy, and a usage mode, where the target instance is an instance used to attach the target EMA super instance, the latency specification indicates latency of accessing the target EMA super instance by the target instance, the placement policy indicates whether the target EMA super instance and a first instance are located on a same resource node, the first instance is one of the at least one target instance, the access policy indicates read/write permission of the at least one target instance on the target EMA super instance, the usage mode indicates a memory addressing manner of the target EMA super instance and a second instance, and the second instance is one of the at least one target instance.

Optionally, the providing manner of the target cloud service is an instanceless providing manner, and the instanceless providing manner means that the target EMA super instance is invisible to the tenant and a life cycle of the target EMA is not managed by the tenant. The performance configuration information of the target cloud service includes a service type, a performance specification, a maximum quantity of concurrent connections, and a price upper limit, where the service type indicates a requirement of a service of the tenant for a memory resource and a computing resource, the performance specification indicates a quantity of target EMA super instances, the maximum quantity of concurrent connections indicates a quantity of instances that can be connected to the target EMA super instance at a same moment, and the price upper limit indicates an upper limit of a resource provided by the cloud platform for the tenant.

Optionally, the plurality of resource nodes are located in at least one resource pool, and the creation module 1603 is specifically configured to:
obtain attribute information of an available resource of each resource node in each resource pool;
determine the target resource node from the plurality of resource nodes based on the attribute information of the available resource of each resource node in each resource pool and the performance configuration information, where all resource nodes in the target resource node are located in a same resource pool;
create an elastic memory accelerator instance EMAI in each resource node included in the target resource node, to obtain one or more EMAIs; and
generate the target EMA super instance based on the one or more EMAIs.

Optionally, the EMAS management node further includes:
a first determining module, configured to determine, based on resource usage of the target EMA super instance by the tenant, whether a resource of the target EMA super instance is overloaded;
a second determining module, configured to: when determining that the resource of the target EMA super instance is overloaded, determine, based on the attribute information of the target cloud service, whether a resource provided by the cloud platform for the target EMA super instance reaches a configured resource upper limit; and
an adjustment module, configured to adjust the target resource node when the resource provided by the cloud platform for the target EMA super instance does not reach the configured resource upper limit.

Optionally, the EMAS management node further includes:
a prompt module, configured to send prompt information to the tenant when the resource provided by the cloud platform for the target EMA super instance reaches the configured resource upper limit, where the prompt information indicates that the resource provided by the cloud platform for the target EMA super instance has reached the configured resource upper limit.

In this embodiment of this application, the attribute information of the target cloud service is input by the tenant based on the service requirement. In other words, the tenant may directly customize a computing resource and a memory resource of the target cloud service based on the service requirement of the tenant, without being limited by a preset specification, to meet the requirement of the tenant and improve performance of the cloud service. In addition, the target resource node includes a plurality of resource nodes, in other words, in this embodiment of this application, resources of the at least one resource node can be integrated to provide a service for the tenant. In this way, while the user requirement is met, utilization of an idle resource in a data center can be effectively improved, and a resource waste and operation and maintenance costs of a cloud service provider can be reduced.

It should be noted that, when the EMAS management node provided in the foregoing embodiment provides the cloud service, division into the foregoing functional modules is merely used as an example for description. During actual application, the foregoing functions may be allocated to different functional modules for implementation as required. To be specific, an internal structure of the node is divided into different functional modules, to implement all or some of the functions described above. In addition, the EMAS management node provided in the foregoing embodiment and the cloud service providing method embodiment belong to a same concept. For a specific implementation process, refer to the method embodiments. Details are not described herein again.

The providing module, the obtaining module, the creation module, and the setting module in the EMAS management node shown in FIG. 16 may all be implemented by using software, or may be implemented by using hardware, or may be implemented by using a combination of software and hardware. The following uses the providing module in the apparatus for providing a cloud service as an example to describe an implementation of the providing module. Similarly, for an implementation of the foregoing another module, refer to the implementation of the providing module.

The module is used as an example of a software functional unit, and the providing module may include code run on a computing instance. The computing instance may include at least one of a physical host, a virtual machine, and a container. Further, there may be one or more computing instances. For example, the providing module may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same VPC or a plurality of virtual private clouds (virtual private clouds, VPCs). Usually, one VPC is disposed in one region. A communication gateway needs to be set in each VPC for communication between two VPCs in a same region and cross-region communication between VPCs in different regions. The VPCs are interconnected through the communication gateway.

The module is used as an example of a hardware functional unit, and the providing module may include at least one computing device, for example, a server. Alternatively, the providing module may be a device implemented by an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), a generic array logic (generic array logic, GAL), or any combination thereof.

A plurality of computing devices included in the providing module may be distributed in a same region, or may be distributed in different regions. The plurality of computing devices included in the providing module may be distributed in a same AZ, or may be distributed in different AZs. Similarly, the plurality of computing devices included in the providing module may be distributed in a same VPC, or may be distributed in a plurality of VPCs. The plurality of computing devices may be any combination of computing devices such as the server, the ASIC, the PLD, the CPLD, the FPGA, and the GAL.

In another embodiment, the providing module in the EMAS management node may be configured to perform any step in the foregoing cloud service providing method, the obtaining module in the EMAS management node may be configured to perform any step in the foregoing cloud service providing method, the creation module in the EMAS management node may be configured to perform any step in the foregoing cloud service providing method, and the setting module in the EMAS management node may be configured to perform any step in the foregoing cloud service providing method. Steps that the providing module, the obtaining module, the creation module, and the setting module in the EMAS management node are responsible for implementing may be specified as required. The providing module, the obtaining module, the creation module, and the setting module in the EMAS management node respectively implement different steps in the foregoing cloud service providing method, to implement all functions of the EMAS management node.

FIG. 17 is a diagram of an architecture of a cloud platform according to an embodiment of this application. The cloud platform includes an EMAS management node and a plurality of resource nodes, and the resource node is configured to provide at least one of a computing resource and a memory resource. The EMAS management node establishes communication connections with the plurality of resource nodes.

The EMAS management node is configured to: provide a configuration interface, obtain attribute information of a target cloud service from the configuration interface, create, based on the attribute information, a target elastic memory accelerator EMA super instance in a target resource node included in the plurality of resource nodes, set a management interface of the target EMA super instance based on a providing manner of the target cloud service, and provide the management interface for a tenant.

The EMAS management node and the plurality of resource nodes in FIG. 17 may be implemented by using software, or may be implemented by using hardware. For example, the following uses the EMAS management node as an example to describe an implementation of the EMAS management node. Similarly, for an implementation of the resource nodes, refer to the implementation of the EMAS management node.

The EMAS management node may include code run on a computing instance. The computing instance may include at least one of a physical host (a computing device), a virtual machine, and a container. Further, there may be one or more computing instances. For example, the EMAS management node may include code run on a plurality of hosts/virtual machines/containers. It should be noted that the plurality of hosts/virtual machines/containers configured to run the code may be distributed in a same region, or may be distributed in different regions. Further, the plurality of hosts/virtual machines/containers configured to run the code may be distributed in a same AZ, or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same VPC, or may be distributed on a plurality of VPCs. Usually, one VPC is disposed in one region. A communication gateway needs to be set in each VPC for communication between two VPCs in a same region and cross-region communication between VPCs in different regions. The VPCs are interconnected through the communication gateway.

The EMAS management node may include at least one computing device, for example, a server. Alternatively, the EMAS management node may be a device implemented by using an ASIC, a PLD, or the like. The PLD may be implemented by a CPLD, an FPGA, GAL, or any combination thereof.

A plurality of computing devices included in the EMAS management node may be distributed in a same region, or may be distributed in different regions. The plurality of computing devices included in the EMAS management node may be distributed in a same AZ, or may be distributed in different AZs. Similarly, the plurality of computing devices included in the EMAS management node may be distributed in a same VPC, or may be distributed in a plurality of VPCs. The plurality of computing devices may be any combination of computing devices such as the server, the ASIC, the PLD, the CPLD, the FPGA, and the GAL.

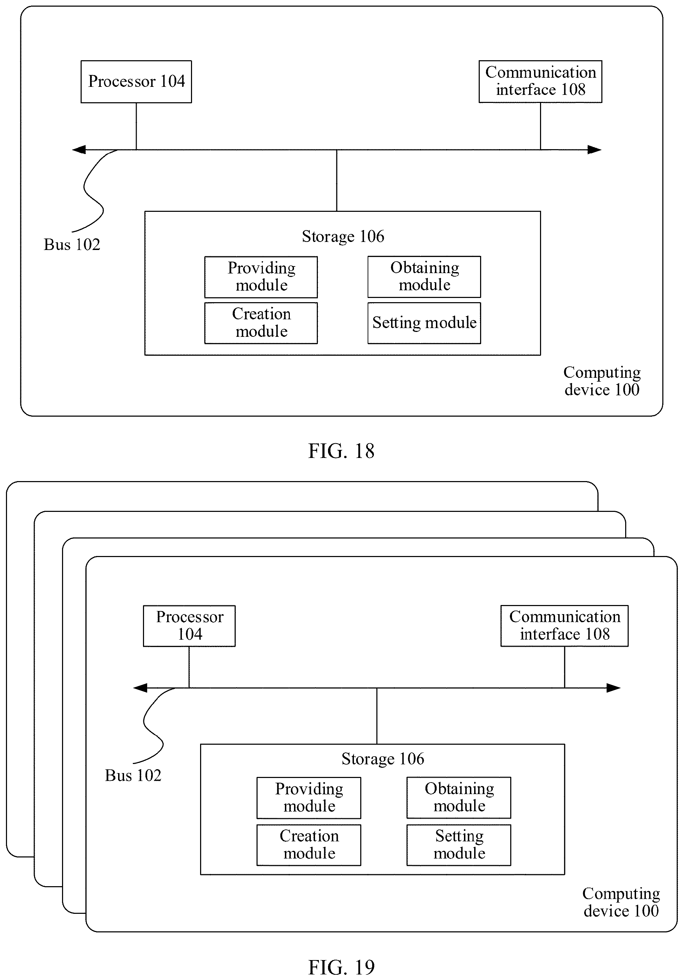

An embodiment of this application further provides a computing device 100. As shown in FIG. 18, the computing device 100 includes a bus 102, a processor 104, a storage 106, and a communication interface 108. The processor 104, the storage 106, and the communication interface 108 communicate with each other through the bus 102. The computing device 100 may be a server or a terminal device. It should be understood that quantities of processors and storages in the computing device 100 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used in FIG. 18 for representation, but it does not mean that there is only one bus or only one type of bus. The bus 102 may include a path for transmitting information between components (for example, the storage 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), a digital signal processor (digital signal processor, DSP), and an integrated circuit. The integrated circuit is, for example, an ASIC, a PLD, or a combination thereof. Optionally, the PLD is a CPLD, an FPGA, GAL, or any combination thereof.

The storage 106 may include a volatile memory (volatile memory), for example, a random access memory (random access memory, RAM). The storage 106 may further include a non-volatile memory (non-volatile memory), for example, a read-only memory (read-only memory, ROM), a flash memory, a hard disk drive (hard disk drive, HDD), or a solid-state drive (solid-state drive, SSD), or any other medium that can be configured to carry or store expected program code in a form of an instruction or a data structure and that can be accessed by a computer, but is not limited thereto. The storage 106 exists independently, and is connected to the processor 104 through the bus 102, or the storage 106 is integrated with the processor 104.

The storage 106 stores executable program code, and the processor 104 executes the executable program code to implement the foregoing cloud service providing method. In other words, the storage 106 stores instructions for performing the cloud service providing method.

For example, the storage 106 stores the executable code, and the processor 104 executes the executable code to implement functions of the providing module, the obtaining module, the creation module, and the setting module shown in FIG. 16. In other words, the storage 106 stores instructions for performing the cloud service providing method provided in embodiments of this application.

The communication interface 108 implements communication between the computing device 100 and another device or a communication network by using a transceiver module, for example, but not limited to a network interface card or a transceiver. The network interface includes a wired communication interface, or further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

An embodiment of this application further provides a computing device cluster. The computing device cluster includes a plurality of computing devices. The computing device may be a server, for example, a central server, an edge server, or a local server in a local data center. In some embodiments, the computing device may alternatively be a terminal device like a desktop computer, a notebook computer, or a smartphone.

As shown in FIG. 19, the computing device cluster includes a plurality of computing devices 100. Storages 106 in the plurality of computing devices 100 in the computing device cluster may store same instructions for performing the foregoing cloud service providing method.

In some possible implementations, the storages 106 in the plurality of computing devices 100 in the computing device cluster may alternatively separately store some instructions for performing the foregoing cloud service providing method. In other words, a combination of the plurality of computing devices 100 may jointly execute all instructions for performing the foregoing cloud service providing method.

It should be noted that the storages 106 in the different computing devices 100 in the computing device cluster may store different instructions for performing some functions of the foregoing cloud service providing method. In other words, the instructions stored in the storages 106 in different computing devices 100 may implement functions of some or all modules included in the following cloud service providing apparatus.

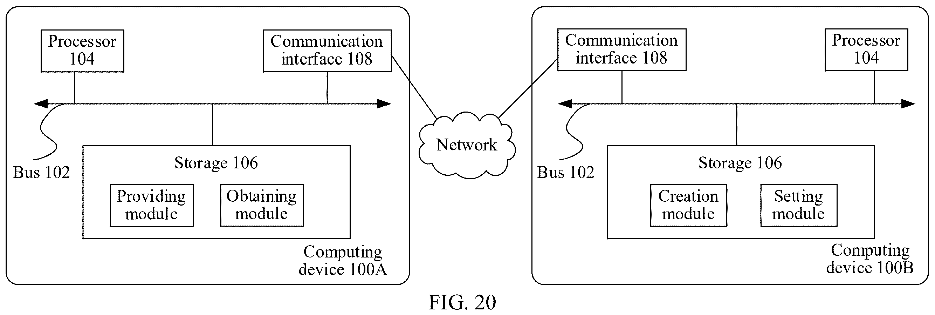

In some possible implementations, one or more computing devices in the computing device cluster may be connected through a network. The network may be a wide area network, a local area network, or the like. FIG. 20 shows a possible implementation. As shown in FIG. 20, two computing devices 100A and 100B are connected through a network. Specifically, each computing device is connected to the network through a communication interface of the computing device. In this type of possible implementation, a storage 106 in the computing device 100A stores instructions for performing functions of a part of modules included in the EMAS management node. In addition, a storage 106 in the computing device 100B stores instructions for performing functions of the other part of modules included in the EMAS management node.

It should be understood that functions of the computing device 100A shown in FIG. 20 may alternatively be implemented by a plurality of computing devices 100. Similarly, functions of the computing device 100B may alternatively be implemented by a plurality of computing devices 100.

An embodiment of this application further provides another computing device cluster. For a connection relationship between computing devices in the computing device cluster, refer to the connection manner of the computing device cluster in FIG. 19 and FIG. 20 similarly. A difference lies in that storages 106 in one or more computing devices 100 in the computing device cluster may store same instructions for performing the cloud service providing method.

In some possible implementations, the storages 106 in the one or more computing devices 100 in the computing device cluster may alternatively separately store some instructions for performing the cloud service providing method. In other words, a combination of the one or more computing devices 100 may jointly execute the instructions for performing the cloud service providing method.

An embodiment of this application further provides a computer-readable storage medium. The computer-readable storage medium may be any usable medium that can be stored in a computing device, or a data storage device like a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct a computing device in a computer device cluster to perform the cloud service providing method provided in embodiments of this application.

An embodiment of this application further provides a computer program product including instructions. The computer program product may be software or a program product that includes the instructions and that can run on a computing device or can be stored in any usable medium. When the computer program product runs on at least one computing device cluster, the computing device cluster is caused to perform the cloud service providing method.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer instructions are loaded and executed on a computer, the procedures or the functions in embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a data subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state disk, SSD)), or the like. It should be noted that the computer-readable storage medium mentioned in embodiments of this application may be a non-volatile storage medium, that is, may be a non-transitory storage medium.

It should be understood that "a plurality of" mentioned in this specification means two or more. In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions. For example, the attribute information of the target cloud service in embodiments of this application is obtained under sufficient authorization.

The foregoing descriptions are merely embodiments of this application, but are not intended to limit this application. Any modification, equivalent replacement, improvement, or the like made without departing from the spirit and principle of this application should fall within the protection scope of this application.

## Claims

1. A cloud service providing method, applied to an elastic memory accelerator service EMAS management node comprised in a cloud platform, wherein the cloud platform further comprises a plurality of resource nodes, the resource node is configured to provide at least one of a computing resource or a memory resource, and the method comprises:
providing a configuration interface, wherein the configuration interface is used to prompt a tenant to input attribute information of a to-be-provided target cloud service based on a service requirement, and the attribute information comprises a providing manner of the target cloud service and performance configuration information of the target cloud service;
obtaining the attribute information of the target cloud service from the configuration interface;
creating, based on the attribute information, a target elastic memory accelerator EMA super instance in a target resource node comprised in the plurality of resource nodes, wherein the target EMA super instance is used to provide the target cloud service for the tenant, the target resource node comprises at least one resource node, and an available resource of the target resource node meets the service requirement; and
setting a management interface of the target EMA super instance based on the providing manner of the target cloud service, and providing the management interface for the tenant.

2. The method according to claim 1, wherein the providing manner of the target cloud service is a super instance providing manner, and the super instance providing manner means that the target EMA super instance is visible to the tenant and a life cycle of the target EMA is managed by the tenant; and
the performance configuration information of the target cloud service comprises a usage type, a memory capacity, a capacity guarantee mode, a capacity step, a computing resource, and bandwidth, wherein the usage type indicates whether the target EMA super instance provides a service in an attachment form, the memory capacity indicates a memory capacity of the target EMA super instance, the capacity guarantee mode indicates whether a resource node on which a memory resource of the target EMA super instance is distributed is variable, the capacity step indicates a memory size of each elastic memory accelerator instance EMAI comprised in the target EMA super instance, the computing resource indicates computing performance of the target EMA super instance, and the bandwidth indicates a data transmission amount of the target EMA super instance in unit time.

3. The method according to claim 2, wherein when the usage type indicates that the target EMA super instance does not provide the service in the attachment form, the performance configuration information of the target cloud service further comprises a latency specification and a placement policy, the latency specification indicates access latency of the memory resource of the target EMA super instance, and the placement policy indicates whether the memory resource and the computing resource of the target EMA super instance are located on a same resource node.

4. The method according to claim 2, wherein when the usage type indicates that the target EMA super instance provides the service in the attachment form, the performance configuration information of the target cloud service further comprises an identifier of at least one target instance, a latency specification, a placement policy, an access policy, and a usage mode, wherein the target instance is an instance used to attach the target EMA super instance, the latency specification indicates latency of accessing the target EMA super instance by the target instance, the placement policy indicates whether the target EMA super instance and a first instance are located on a same resource node, the first instance is one of the at least one target instance, the access policy indicates read/write permission of the at least one target instance on the target EMA super instance, the usage mode indicates a memory addressing manner of the target EMA super instance and a second instance, and the second instance is one of the at least one target instance.

5. The method according to claim 1, wherein the providing manner of the target cloud service is an instanceless providing manner, and the instanceless providing manner means that the target EMA super instance is invisible to the tenant and a life cycle of the target EMA is not managed by the tenant; and
the performance configuration information of the target cloud service comprises a service type, a performance specification, a maximum quantity of concurrent connections, and a price upper limit, wherein the service type indicates a requirement of a service of the tenant for a memory resource and a computing resource, the performance specification indicates a quantity of target EMA super instances, the maximum quantity of concurrent connections indicates a quantity of instances that can be connected to the target EMA super instance at a same moment, and the price upper limit indicates an upper limit of a resource provided by the cloud platform for the tenant.

6. The method according to claim 1, wherein the plurality of resource nodes are located in at least one resource pool, and creating, based on the performance configuration information, the target elastic memory accelerator EMA super instance in the target resource node comprised in the plurality of resource nodes comprises:
obtaining attribute information of an available resource of each resource node in each resource pool;
determining the target resource node from the plurality of resource nodes based on the attribute information of the available resource of each resource node in each resource pool and the performance configuration information, wherein all resource nodes in the target resource node are located in a same resource pool;
creating an elastic memory accelerator instance EMAI in each resource node comprised in the target resource node, to obtain one or more EMAIs; and
generating the target EMA super instance based on the one or more EMAIs.

7. The method according to claim 1, wherein after setting the management interface of the target EMA super instance based on the providing manner of the target cloud service, and providing the management interface for the tenant, the method further comprises:
determining, based on resource usage of the target EMA super instance by the tenant, whether a resource of the target EMA super instance is overloaded;
when determining that the resource of the target EMA super instance is overloaded, determining, based on the attribute information of the target cloud service, whether a resource provided by the cloud platform for the target EMA super instance reaches a configured resource upper limit; and
adjusting the target resource node when the resource provided by the cloud platform for the target EMA super instance does not reach the configured resource upper limit.

8. The method according to claim 7, wherein the method further comprises:
sending prompt information to the tenant when the resource provided by the cloud platform for the target EMA super instance reaches the configured resource upper limit, wherein the prompt information indicates that the resource provided by the cloud platform for the target EMA super instance has reached the configured resource upper limit.

9. A cloud platform, wherein the cloud platform comprises an elastic memory accelerator service EMAS management node and a plurality of resource nodes, and the resource node is configured to provide at least one of a computing resource or a memory resource; and
the EMAS management node is configured to: provide a configuration interface, wherein the configuration interface is used to prompt a tenant to input attribute information of a to-be-provided target cloud service based on a service requirement, and the attribute information comprises a providing manner of the target cloud service and performance configuration information of the target cloud service; obtain the attribute information of the target cloud service from the configuration interface; create, based on the attribute information, a target elastic memory accelerator EMA super instance in a target resource node comprised in the plurality of resource nodes, wherein the target EMA super instance is used to provide the target cloud service for the tenant, the target resource node comprises at least one resource node, and an available resource of the target resource node meets the service requirement; and set a management interface of the target EMA super instance based on the providing manner of the target cloud service, and provide the management interface for the tenant.

10. The cloud platform according to claim 9, wherein the providing manner of the target cloud service is a super instance providing manner, and the super instance providing manner means that the target EMA super instance is visible to the tenant and a life cycle of the target EMA is managed by the tenant; and
the performance configuration information of the target cloud service comprises a usage type, a memory capacity, a capacity guarantee mode, a capacity step, a computing resource, and bandwidth, wherein the usage type indicates whether the target EMA super instance provides a service in an attachment form, the memory capacity indicates a memory capacity of the target EMA super instance, the capacity guarantee mode indicates whether a resource node on which a memory resource of the target EMA super instance is distributed is variable, the capacity step indicates a memory size of each elastic memory accelerator instance EMAI comprised in the target EMA super instance, the computing resource indicates computing performance of the target EMA super instance, and the bandwidth indicates a data transmission amount of the target EMA super instance in unit time.

11. The cloud platform according to claim 10, wherein when the usage type indicates that the target EMA super instance does not provide the service in the attachment form, the performance configuration information of the target cloud service further comprises a latency specification and a placement policy, the latency specification indicates access latency of the memory resource of the target EMA super instance, and the placement policy indicates whether the memory resource and the computing resource of the target EMA super instance are located on a same resource node.

12. The cloud platform according to claim 10, wherein when the usage type indicates that the target EMA super instance provides the service in the attachment form, the performance configuration information of the target cloud service further comprises an identifier of at least one target instance, a latency specification, a placement policy, an access policy, and a usage mode, wherein the target instance is an instance used to attach the target EMA super instance, the latency specification indicates latency of accessing the target EMA super instance by the target instance, the placement policy indicates whether the target EMA super instance and a first instance are located on a same resource node, the first instance is one of the at least one target instance, the access policy indicates read/write permission of the at least one target instance on the target EMA super instance, the usage mode indicates a memory addressing manner of the target EMA super instance and a second instance, and the second instance is one of the at least one target instance.

13. The cloud platform according to claim 9, wherein the providing manner of the target cloud service is an instanceless providing manner, and the instanceless providing manner means that the target EMA super instance is invisible to the tenant and a life cycle of the target EMA is not managed by the tenant; and
the performance configuration information of the target cloud service comprises a service type, a performance specification, a maximum quantity of concurrent connections, and a price upper limit, wherein the service type indicates a requirement of a service of the tenant for a memory resource and a computing resource, the performance specification indicates a quantity of target EMA super instances, the maximum quantity of concurrent connections indicates a quantity of instances that can be connected to the target EMA super instance at a same moment, and the price upper limit indicates an upper limit of a resource provided by the cloud platform for the tenant.

14. The cloud platform according to claim 9, wherein the plurality of resource nodes are located in at least one resource pool; and
the EMAS management node is configured to: obtain attribute information of an available resource of each resource node in each resource pool; determine the target resource node from the plurality of resource nodes based on the attribute information of the available resource of each resource node in each resource pool and the performance configuration information, wherein all resource nodes in the target resource node are located in a same resource pool; create an elastic memory accelerator instance EMAI in each resource node comprised in the target resource node, to obtain one or more EMAIs; and generate the target EMA super instance based on the one or more EMAIs.

15. The cloud platform according to claim 9, wherein
the EMAS management node is configured to: determine, based on resource usage of the target EMA super instance by the tenant, whether a resource of the target EMA super instance is overloaded; when determining that the resource of the target EMA super instance is overloaded, determine, based on the attribute information of the target cloud service, whether a resource provided by the cloud platform for the target EMA super instance reaches a configured resource upper limit; and adjust the target resource node when the resource provided by the cloud platform for the target EMA super instance does not reach the configured resource upper limit.

16. The cloud platform according to claim 15, wherein
the EMAS management node is configured to send prompt information to the tenant when the resource provided by the cloud platform for the target EMA super instance reaches the configured resource upper limit, wherein the prompt information indicates that the resource provided by the cloud platform for the target EMA super instance has reached the configured resource upper limit.

17. A computing device cluster, wherein the computing device cluster comprises at least one computing device, and each computing device comprises a processor and a storage; and
the processor in the at least one computing device is configured to execute instructions stored in the storage in the at least one computing device, to cause the computing device cluster to perform the method according to any one of claims 1 to 8.

18. A computer-readable storage medium, wherein the storage medium comprises computer program instructions, and when the computer program instructions are executed by a computing device cluster, the computing device cluster performs the method according to any one of claims 1 to 8.

19. A computer program product comprising instructions, wherein when the instructions are run by a computing device cluster, the computing device cluster is caused to perform the method according to any one of claims 1 to 8.
